(19) **Europäisches Patentamt / European Patent Office / Office européen des brevets**

(11) **EP 4 510 724 A1**

(12) **EUROPEAN PATENT APPLICATION**
published in accordance with Art. 153(4) EPC

(43) Date of publication:
**19.02.2025 Bulletin 2025/08**

(21) Application number: **23787712.1**

(22) Date of filing: **11.04.2023**

(51) International Patent Classification (IPC):
**H04W 64/00** (2009.01)

(52) Cooperative Patent Classification (CPC):
**H04W 4/70; H04W 64/00**

(86) International application number:
**PCT/CN2023/087656**

(87) International publication number:
**WO 2023/198069 (19.10.2023 Gazette 2023/42)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **12.04.2022 CN 202210384079**

(71) Applicant: **Vivo Mobile Communication Co., Ltd.**
**Dongguan, Guangdong 523863 (CN)**

(72) Inventors:
• **WANG, Yuanyuan**
  **Dongguan, Guangdong 523863 (CN)**
• **LIU, Shixiao**
  **Dongguan, Guangdong 523863 (CN)**
• **WU, Huaming**
  **Dongguan, Guangdong 523863 (CN)**
• **SI, Ye**
  **Dongguan, Guangdong 523863 (CN)**

(74) Representative: **Murgitroyd & Company**
**165-169 Scotland Street**
**Glasgow G5 8PL (GB)**

(54) **POSITIONING METHOD AND APPARATUS, TERMINAL, AND READABLE STORAGE MEDIUM**

(57) This application discloses a positioning method and apparatus, a terminal, and a readable storage medium, pertaining to the field of communication technologies. The positioning method according to an embodiment of this application includes: transmitting, by a first terminal, a first sidelink SL positioning reference signal to a second terminal at least twice within first time, and receiving a second SL positioning reference signal from the second terminal; and determining, by the first terminal, first time information and/or second time information; where the first time information and the second time information are both related to transmission time of the first SL positioning reference signal and/or transmission time of the second SL positioning reference signal.

A first terminal sends a first SL positioning reference signal to a second terminal at least twice within first time, and receives a second SL positioning reference signal from the second terminal — 201

The first terminal determines first time information and/or second time information — 202

**FIG. 2**

**Description**

**CROSS-REFERENCE TO RELATED APPLICATION**

This application claims priority to Chinese Patent Application No. 202210384079.7, filed in China on April 12, 2022, which is incorporated herein by reference in its entirety.

**TECHNICAL FIELD**

This application pertains to the field of communication technologies, and specifically relates to a positioning method and apparatus, a terminal, and a readable storage medium.

**BACKGROUND**

At present, terminals can be positioned using network-side devices. For example, terminals can be positioned using positioning methods such as time difference of arrival (Time Difference Of Arrival, TDOA) or round trip time (Round Trip Time, RTT).

Specifically, in the TDOA positioning method, location information of a terminal can be determined by detecting an absolute time difference between times of arrival at two base stations of signals transmitted by the terminal. In the RTT positioning method, transmission time of a signal between a terminal and a base station can be obtained based on the round trip time, so that location information of the terminal can be estimated.

However, large clock error and synchronization error exist between two base stations or between a terminal and a base station in the foregoing methods. The RTT positioning method can eliminate the synchronization error, but large clock error still exists, causing low positioning accuracy.

**SUMMARY**

Embodiments of this application provide a positioning method and apparatus, a terminal, and a readable storage medium, so as to solve the problem of low positioning accuracy caused by large clock error and synchronization error.

According to a first aspect, a positioning method is provided. The method includes: transmitting, by a first terminal, a first sidelink (sidelink, SL) positioning reference signal to a second terminal at least twice within first time, and receiving a second SL positioning reference signal from the second terminal; and determining, by the first terminal, first time information and/or second time information; where the first time information and the second time information are both related to transmission time of the first SL positioning reference signal and/or transmission time of the second SL positioning reference signal.

According to a second aspect, a positioning apparatus is provided. The apparatus includes a transmission module and a determining module. The transmission module is configured to transmit a first SL positioning reference signal to a second terminal at least twice within first time and receive a second SL positioning reference signal from the second terminal; and the determining module is configured to determine first time information and/or second time information; where the first time information and the second time information are both related to transmission time of the first SL positioning reference signal and/or transmission time of the second SL positioning reference signal.

According to a third aspect, a positioning method is provided. The method includes: receiving, by a second terminal within first time, a first SL positioning reference signal transmitted by a first terminal at least twice, and transmitting a second SL positioning reference signal to the second terminal; and determining, by the second terminal, first time information and/or second time information; where the first time information and the second time information are both related to transmission time of the first SL positioning reference signal and/or transmission time of the second SL positioning reference signal.

According to a fourth aspect, a positioning apparatus is provided. The apparatus includes a transmission module and a determining module. the transmission module is configured to receive, within first time, a first SL positioning reference signal transmitted by a first terminal at least twice and transmit a second SL positioning reference signal to a second terminal; and the determining module is configured to determine first time information and/or second time information; where the first time information and the second time information are both related to transmission time of the first SL positioning reference signal and/or transmission time of the second SL positioning reference signal.

According to a fifth aspect, a terminal is provided. The terminal includes a processor and a memory, where the memory stores a program or instruction capable of running on the processor, and when the program or instruction is executed by the processor, steps of the method according to the first aspect are implemented.

According to a sixth aspect, a terminal is provided. The terminal includes a processor and a memory, where the memory stores a program or instruction capable of running on the processor, and when the program or instruction is executed by the processor, steps of the method according to the third aspect are implemented.

According to a seventh aspect, a terminal is provided, including a processor and a communications interface, where the communications interface is configured to transmit a first SL positioning reference signal to a second terminal at least twice within first time and receive a second SL positioning reference signal from the second terminal; and the processor is configured to determine first time information and/or second time information; where the first time information and the second time information are both related to transmission time of the first SL positioning reference signal and/or transmission time of the second SL positioning reference signal;

and/or

the communications interface is configured to receive, within first time, a first SL positioning reference signal transmitted by a first terminal at least twice and transmit a second SL positioning reference signal to a second terminal; and the processor is configured to determine first time information and/or second time information; where the first time information and the second time information are both related to transmission time of the first SL positioning reference signal and/or transmission time of the second SL positioning reference signal.

According to an eighth aspect, a communications system is provided, including the terminal according to the fifth aspect and the terminal according to the sixth aspect, where the terminal according to the fifth aspect can be configured to implement steps of the positioning method according to the first aspect, and the terminal according to the sixth aspect can be configured to implement steps of the positioning method according to the third aspect.

According to a ninth aspect, a readable storage medium is provided. The readable storage medium stores a program or instruction. When the program or instruction is executed by a processor, steps of the method according to the first aspect or steps of the method according to the third aspect are implemented.

According to a tenth aspect, a chip is provided. The chip includes a processor and a communications interface, where the communications interface is coupled to the processor, and the processor is configured to run a program or instruction to implement the method according to the first aspect or the method according to the third aspect.

According to an eleventh aspect, a computer program/program product is provided. The computer program/-program product is stored in a storage medium, and the computer program/program product is executed by at least one processor to implement steps of the method according to the first aspect or steps of the method according to the third aspect.

In an embodiment of this application, a first terminal can transmit a first SL positioning reference signal to a second terminal at least twice within first time and receive a second SL positioning reference signal from the second terminal; and the first terminal can determine first time information and/or second time information; where the first time information and the second time information are both related to transmission time of the first SL positioning reference signal and/or transmission time of the second SL positioning reference signal. In this method, the first terminal can determine, through transmission of SL positioning reference signals with the second terminal, the time information related to the transmission time of the first SL positioning reference signal and the transmission time of the second SL positioning reference signal. In other words, the time information related to the transmission time of SL positioning reference signals transmitted between the two terminals in a double-sided two-way manner can be determined. Therefore, this method can eliminate the synchronization error and alleviate the impact of the clock error during terminal positioning, thereby improving the positioning accuracy.

**BRIEF DESCRIPTION OF DRAWINGS**

FIG. 1 is a block diagram of a wireless communications system to which embodiments of this application are applicable;
FIG. 2 is a first flowchart of a positioning method according to an embodiment of this application;
FIG. 3 is a first schematic diagram of a positioning method according to an embodiment of this application;
FIG. 4 is a second schematic diagram of a positioning method according to an embodiment of this application;
FIG. 5 is a third schematic diagram of a positioning method according to an embodiment of this application;
FIG. 6 is a second flowchart of a positioning method according to an embodiment of this application;
FIG. 7 is a first schematic diagram of a positioning apparatus according to an embodiment of this application;
FIG. 8 is a second schematic diagram of a positioning apparatus according to an embodiment of this application;
Fig. 9 is a schematic diagram of a terminal according to an embodiment of this application; and
FIG. 10 is a schematic diagram of a hardware structure of a terminal according to an embodiment of this application.

**DESCRIPTION OF EMBODIMENTS**

The following clearly describes the technical solutions in the embodiments of this application with reference to the accompanying drawings in the embodiments of this application. Apparently, the described embodiments are only some rather than all of the embodiments of this application. All other embodiments obtained by persons of ordinary skill in the art based on the embodiments of this application shall fall within the protection scope of this application.

The terms "first", "second", and the like in this specification and claims of this application are used to distinguish between similar objects rather than to describe a specific order or sequence. It should be understood that terms used in this way are interchangeable in appropriate circumstances so that the embodiments of this application can be implemented in other orders than the order illustrated or described herein. In addition, "first" and "second" are usually used to distinguish objects of a same type, and do not restrict the number of objects. For example, there may be one or a plurality of first objects. In addition, "and/or" in the specification and claims represents at least one of connected objects, and the character "/" generally indicates that the associated objects have an "or" relationship.

It should be noted that the technologies described in the embodiments of this application are not limited to long term evolution (Long Term Evolution, LTE)/LTE-Advanced (LTE-Advanced, LTE-A) systems, and may also be used in other wireless communications systems, such as code division multiple access (Code Division Multiple Access, CDMA), time division multiple access (Time Division Multiple Access, TDMA), frequency division multiple access (Frequency Division Multiple Access, FDMA), orthogonal frequency division multiple access (Orthogonal Frequency Division Multiple Access, OFDMA), single-carrier frequency-division multiple access (Single-carrier Frequency Division Multiple Access, SC-FDMA), and other systems. The terms "system" and "network" in the embodiments of this application are usually used interchangeably. Techniques described herein may be used in the aforementioned systems and radio technologies, and may also be used in other systems and radio technologies. In the following descriptions, a new radio (New Radio, NR) system is described for an illustration purpose, and NR terms are used in most of the following descriptions, although these technologies may also be applied to other applications than an NR system application, for example, the 6th generation (6th Generation, 6G) communications system.

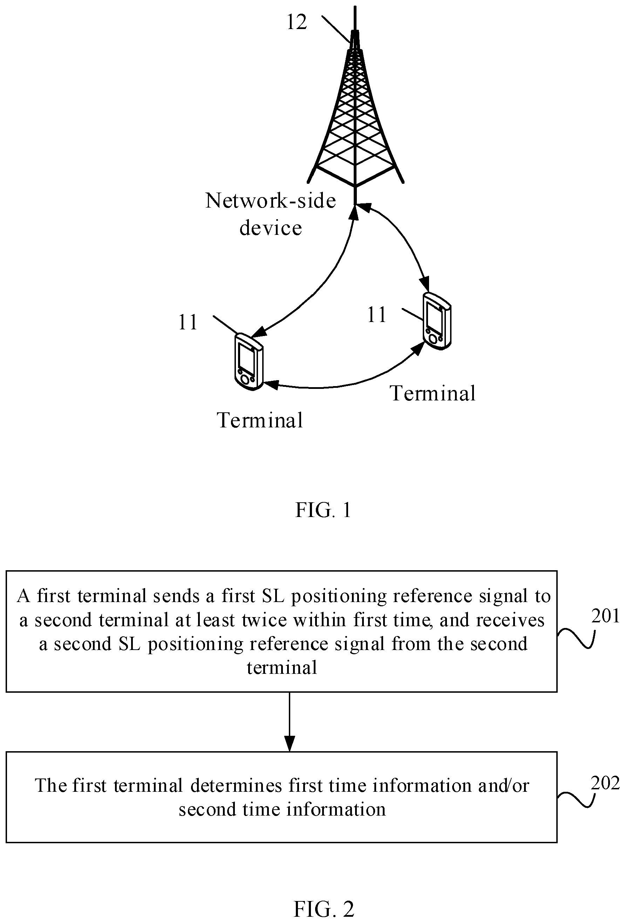

FIG. 1 is a block diagram of a wireless communications system to which embodiments of this application are applicable. The wireless communications system includes a terminal 11 and a network-side device 12. The terminal 11 includes a first terminal and a second terminal.

For example, the terminal 11 may be a terminal-side device, such as a mobile phone, a tablet personal computer (Tablet Personal Computer), a laptop computer (Laptop Computer) or a notebook computer, a personal digital assistant (Personal Digital Assistant, PDA), a palmtop computer, a netbook, an ultra-mobile personal computer (ultra-mobile personal computer, UMPC), a mobile Internet device (Mobile Internet Device, MID), an augmented reality (augmented reality, AR)/virtual reality (virtual reality, VR) device, a robot, a wearable device (Wearable Device), vehicle user equipment (VUE), or pedestrian user equipment (PUE), a smart appliance (a home appliance with a wireless communication function, for example, a refrigerator, a television, a washing machine, or furniture), a game console, a personal computer (personal computer, PC), a teller machine, or a self-service machine. The wearable device includes a smart watch, a smart band, smart earphones, smart glasses, smart jewelry (a smart bangle, a smart bracelet, a smart ring, a smart necklace, a smart ankle bangle, a smart anklet, or the like), a smart wristband, smart clothing, or the like. It should be noted that a specific type of the terminal 11 is not limited in the embodiments of this application. The network-side device 12 may include an access network device or a core network device, where the access network device 12 may also be referred to as a radio access network device, a radio access network (Radio Access Network, RAN), a radio access network function, or a radio access network unit. The access network device 12 may include a base station, a WLAN access point, a Wi-Fi node, or the like. The base station may be referred to as a NodeB, an evolved NodeB (eNB), an access point, a base transceiver station (Base Transceiver Station, BTS), a radio base station, a radio transceiver, a basic service set (Basic Service Set, BSS), an extended service set (Extended Service Set, ESS), a home NodeB, a home evolved NodeB, a transmission and reception point (Transmitting Receiving Point, TRP), or another appropriate term in the art. Provided that a same technical effect is achieved, the base station is not limited to a specific technical term. It should be noted that in the embodiments of this application, the base station in the NR system is merely used as an example, and a specific type of the base station is not limited. The core network device may include but is not limited to at least one of the following: a core network node, a core network function, a mobility management entity (Mobility Management Entity, MME), an access and mobility management function (Access and Mobility Management Function, AMF), a session management function (Session Management Function, SMF), a user plane function (User Plane Function, UPF), a policy control function (Policy Control Function, PCF), a policy and charging rules function (Policy and Charging Rules Function, PCRF) unit, an edge application server discovery function (Edge Application Server Discovery Function, EASDF), unified data management (Unified Data Management, UDM), a unified data repository (Unified Data Repository, UDR), a home subscriber server (Home Subscriber Server, HSS), centralized network configuration (Centralized network configuration, CNC), a network repository function (Network Repository Function, NRF), a network exposure function (Network Exposure Function, NEF), a local NEF (local NEF or L-NEF), a binding support function (Binding Support Function, BSF), an application function (Application Function, AF), a location management function (location manage function, LMF), an enhanced serving mobile location centre (Enhanced Serving Mobile Location Centre, E-SMLC), a network data analytics function (network data analytics function, NWDAF), and the like.

The following describes in detail the positioning method and apparatus, terminal, and readable storage medium provided in the embodiments of this application by using some embodiments and application scenarios thereof with reference to the accompanying drawings.

Since the 12th release, the LTE system has started to support SL, which is used for data transmission between terminals directly at the physical layer without using a network device. SL communication is implemented based on broadcast. This is applicable to basic security communication of vehicle to everything (vehicle to everything, V2X) but not to other more advanced V2X services. A 5G NR system supports more advanced SL transmission designs, such as unicast, multicast, or groupcast, so as to support more comprehensive service types.

NR V2X defines two resource allocation modes (namely, mode): mode 1, in which resources are scheduled by a base station; and mode 2, in which a terminal determines a resource for transmission. Resource information of this resource is from a broadcast message of a base station or preconfigured information. If a terminal works within coverage of a base station and has a radio resource control (Radio Resource Control, RRC) connection to the base station, the terminal can work in mode 1 and/or mode 2; if a terminal works within coverage of a base station but has no RRC connection to the base station, the terminal can work only in mode 2; and if a terminal works outside coverage of a base station, the terminal can work only in mode 2 and perform V2X transmission based on preconfigured information.

The specific operation procedure of mode 2 is as follows. After resource selection is triggered, the terminal determines a resource selection window. A lower boundary of the resource selection window is time T1 following the trigger of resource selection and an upper boundary of resource selection is time T2 following the trigger of resource selection, where T2 is a value selected in the packet delay budget (packet delay budget, PDB) for transport block (Transport Block, TB) transmission in the mode implemented by the terminal, and T2 is not earlier than T1. Before resource selection, the terminal can determine a candidate resource set for resource selection based on the measured reference signal receiving power (Reference Signal Receiving Power, RSRP) of the resource in the resource selection window and the corresponding RSRP threshold. Specifically, if the RSRP of a resource is lower than the RSRP threshold, the terminal can determine the resource as a resource in the candidate resource set. Therefore, after determining the candidate resource set, the terminal can randomly select a transmission resource from the candidate resource set, and the terminal can reserve transmission resources for next transmissions during the current transmission.

At present, for terminal positioning in an NR scenario, terminals can be positioned using network-side devices. For example, a terminal can use the RTT positioning method to obtain the time for a signal to be transmitted from the terminal to the base station or from the base station to the terminal, and the location information of the terminal can be estimated by multiplying the time by the radio signal propagation speed. Alternatively, the terminal can use the TDOA positioning method to detect an absolute time difference between times of arrival at two base stations of signals transmitted by the terminal, and then the location information of the terminal is determined.

However, inter-terminal positioning needs to be performed in the V2X scenario. Taking the RTT positioning method for example, a clock error between devices (for example, between terminals) may lead to a large ranging error.

For example, it is assumed that clock offsets of device A and device B are $e_A$ and $e_B$ respectively. Within the delay of transmission between the device A and the device B, introduction of time drift will cause an estimation error. The equation for calculating the estimation error $\hat{T}$ is equation (1).

$$\hat{T} = \frac{1}{2}(T_{round} - T_{reply}) \qquad (1)$$

Then, the equation for calculating the ranging error *error* is equation (2).

$$error = \hat{T} - T \approx \frac{1}{2}(e_B - e_A) \times T_{reply} \qquad (2)$$

$T_{round}$ (for example, the first time information in an embodiment of this application) and $T_{reply}$ (for example, the second time information in an embodiment of this application) are time differences between device A and device B in transmitting signals.

It can be seen that the ranging error increases with the increase of $T_{reply}$. For example, Table 1 shows how the ranging error changes with $T_{reply}$.

**Table 1**

| T_reply \ clock error | 2ppm | 5ppm | 10ppm | 20ppm | 40ppm |
|---|---|---|---|---|---|
| 100μs | 0.1ns | 0.25ns | 0.5ns | 1ns | 2ns |
| 200μs | 0.2ns | 0.5ns | 1ns | 2ns | 4ns |
| 500μs | 0.5ns | 1.25ns | 2.5ns | 5ns | 10ns |
| 1ms | 1ns | 2.5ns | 5ns | 10ns | 20ns |
| 2ms | 2ns | 5ns | 10ns | 20ns | 40ns |
| 5ms | 5ns | 12.5ns | 25ns | 50ns | 100ns |

However, in the TDOA positioning method, a synchronization error also exists between devices in addition to the clock error, causing low positioning accuracy.

To alleviate impact of clock error and synchronization error on the positioning accuracy, in a positioning method according to an embodiment of this application, a transmit terminal can transmit a first SL positioning reference signal to a receive terminal at least twice within first time and receive a second SL positioning reference signal from the receive terminal; and the transmit terminal can determine first time information and/or second time information; where the first time information and the second time information are both related to transmission time of the first SL positioning reference signal and/or transmission time of the second SL positioning reference signal. In this method, the transmit terminal can determine, through transmission of SL positioning reference signals with the receive terminal, the time information related to the transmission time of the first SL positioning reference signal and the transmission time of the second SL positioning reference signal. In other words, the time information related to the transmission time of SL positioning reference signals transmitted between the two terminals in a double-sided two-way manner can be determined. Therefore, this method can eliminate the synchronization error and alleviate the impact of the clock error during terminal positioning, thereby improving the positioning accuracy.

It should be noted that the foregoing transmission time is related to at least one of the following: air interface transmission time of an SL positioning reference signal, transmit timing of an SL positioning reference signal, and receive timing of an SL positioning reference signal.

An embodiment of this application provides a positioning method, and FIG. 2 shows a flowchart of the positioning method provided in the embodiment of this application. As shown in FIG. 2, the positioning method provided in the embodiment of this application may include the following step 201 and step 202.

Step 201. A first terminal transmits a first SL positioning reference signal to a second terminal at least twice within first time, and receives a second SL positioning reference signal from the second terminal.

Optionally, in the embodiment of this application, the SL positioning reference signal may be an SL positioning reference signal (positioning reference signal, PRS) or a reference signal for positioning extended from an SL reference signal. For example, the SL positioning reference signal may be an SL synchronization signal block (SL Synchronization Signal Block, S-SSB), an SL channel state information-reference signal (Channel State Information-Reference Signal, CSI-RS), an SL phase-tracking reference signal (Phase-tracking Reference Signal, PTRS), an SL demodulation reference signal (Demodulation Reference Signal, DMRS), or the like.

Optionally, in the embodiment of this application, the first time may include at least one of the following:

a time range preconfigured by a network side;
a time range defined by a protocol;
at least one time unit scheduled with respect to the first SL positioning reference signal transmitted for the first time;
at least one time unit with respect to the first SL positioning reference signal transmitted for the first time;
a time window preconfigured by a network side; and
a time window defined by a protocol.

The time window includes at least one of start time information and window length.

Optionally, in the embodiment of this application, the at least one time unit scheduled with respect to the first SL positioning reference signal transmitted for the first time may be M time units scheduled with respect to the first SL positioning reference signal transmitted for the first time, where M is greater than or equal to 1.

Optionally, in the embodiment of this application, the at least one time unit with respect to the first SL positioning reference signal transmitted for the first time may be M1 time units scheduled with respect to the first SL positioning reference signal transmitted for the first time, where M1 is greater than or equal to 1.

In the embodiment of this application, the first time may be at least one of a time range/time window preconfigured by the network side or defined by a protocol, at least one time unit scheduled with respect to the first SL positioning reference signal transmitted for the first time; and at least one time unit with respect to the first SL positioning reference signal transmitted for the first time. Therefore, the terminal can transmit SL positioning reference signal in different time ranges, thereby improving the flexibility of terminal positioning. Optionally, in an embodiment of this application, the first SL positioning reference signals transmitted by the first terminal at least twice have the same sequence or the same signal identification information; or the first SL positioning reference signals transmitted by the first terminal at least twice are different.

It can be understood that the first SL positioning reference signals transmitted by the first terminal at least twice may be the same reference signal or different reference signals.

In the embodiment of this application, the first SL positioning reference signals transmitted by the first terminal at least twice may be reference signals with the same sequence or signal identification information, or may be different reference signals. Therefore, the first terminal can transmit the first SL positioning reference signal more flexibly.

Optionally, in an embodiment of this application, the first SL positioning reference signal transmitted by the first terminal at least twice may include at least one of the following:

at least two SL positioning reference signal resources scheduled by one sidelink control information (Sidelink Control Information, SCI);

one SL positioning reference signal group containing at least two SL positioning reference signal resources;

an SL positioning reference signal transmitted repeatedly at least twice;

at least two SL positioning reference signal resources scheduled separately; and

at least two SL positioning reference signal resources required for scheduling or request as indicated by indication information.

Optionally, in the embodiment of this application, because the first terminal transmits the first SL positioning reference signal to the second terminal at least twice and receives the second SL positioning reference signal from the second terminal, the at least two SL positioning reference signal resources scheduled by one SCI may include at least two first SL positioning reference signal resources scheduled by one SCI and the second SL positioning reference signal resource.

Optionally, in the embodiment of this application, the foregoing indication information may use bits to indicate that scheduling or request needs to include at least two SL positioning reference signal resources.

Optionally, in the embodiment of this application, the foregoing indication information may use bits to indicate that scheduling or request needs to include the first SL positioning reference signal resource and the second SL positioning reference signal resource.

In the embodiment of this application, the first SL positioning reference signal transmitted by the first terminal at least twice may include at least one of the following: at least two SL positioning reference signal resources scheduled by one SCI, one SL positioning reference signal group containing at least two SL positioning reference signal resources, an SL positioning reference signal transmitted repeatedly at least twice, at least two SL positioning reference signal resources scheduled separately, or indication information. Therefore, the first terminal can transmit the first SL positioning reference signal more flexibly.

Optionally, in an embodiment of this application, an interval between transmit timing of the second SL positioning reference signal and transmit timing of the first SL positioning reference signal is greater than or equal to a first time threshold.

In the embodiment of this application, the interval between the transmit timing of the second SL positioning reference signal and the transmit timing of the first SL positioning reference signal is greater than or equal to the first time threshold, so that the first terminal can determine the first time information and/or the second time information.

Optionally, in an embodiment of this application, an interval between the transmit timings of the first SL positioning reference signal transmitted at least twice is less than or equal to a second time threshold, or the interval between the transmit timing of the second SL positioning reference signal and the transmit timing of the first SL positioning reference signal is less than or equal to a third time threshold. This ensures that channels between terminals are relatively consistent.

Optionally, in the embodiment of this application, the third time threshold may be greater than the first time threshold.

Optionally, in the embodiment of this application, the first time threshold, the second time threshold, or the third time threshold may be preconfigured by a network side, defined by a protocol, or carried in scheduling information.

For example, the first time threshold is preconfigured by the network side, in which case the first time threshold may be R1 milliseconds or R2 slots preconfigured by the network side.

Optionally, in an embodiment of this application, receive timing of at least one of the second SL positioning reference signals received by the first terminal is between transmit timings of the first SL positioning reference signal transmitted by the first terminal at least twice. In the embodiment of this application, receive timing of at least one of the second SL positioning reference signals is between the transmit timings of the first SL positioning reference signal transmitted at least twice, so that the first terminal can accurately acquire the first time information and/or the second time information.

Optionally, in an embodiment of this application, the first SL positioning reference signal transmitted at least twice, and/or the first SL positioning reference signal and the second SL positioning reference signal each can satisfy a first condition.

Optionally, in the embodiment of this application, the first condition may include at least one of the following:

bandwidths used for transmitting SL positioning reference signals are the same;
starting frequency domain positions used for transmitting SL positioning reference signals are the same;
periodicities for transmitting SL positioning reference signals are the same;
symbols used for transmitting SL positioning reference signals are the same;
comb values (namely, comb structures) used for transmitting SL positioning reference signals are the same;
sub-carrier spacings (sub-carrier space, SCS) used for transmitting SL positioning reference signals are the same; and
sequence identities (Identity, ID) used for transmitting SL positioning reference signals are the same.

Optionally, in the embodiment of this application, if the starting frequency domain positions used for transmitting the first SL positioning reference signal transmitted at least twice are the same, the starting frequency domain position used for transmitting the second SL positioning reference signal is different from that used for transmitting the first SL positioning reference signal transmitted at least twice.

Optionally, in the embodiment of this application, that the first SL positioning reference signal and the second SL positioning reference signal satisfy the first condition may include: the first SL positioning reference signal transmitted at least twice and the second SL positioning reference signal satisfy the first condition, or the first SL positioning reference signal transmitted at least once and the second SL positioning reference signal satisfy the first condition.

In the embodiment of this application, the first SL positioning reference signal and the second SL positioning reference signal may be reference signals satisfying the same first condition. Therefore, the scheduled first SL positioning reference signal and second SL positioning reference signal can be more consistent. In other words, the first time information and the second time information can be obtained based on similar signals and therefore more consistent.

In the embodiment of this application, the first SL positioning reference signal transmitted at least twice, and/or the first SL positioning reference signal and the second SL positioning reference signal can be reference signals satisfying different first conditions. Therefore, the terminal can determine the first SL positioning reference signal and the second SL positioning reference signal more flexibly. Optionally, in an embodiment of this application, the second SL positioning reference signal and the first SL positioning reference signal transmitted at least twice can satisfy a second condition.

Optionally, in the embodiment of this application, the second condition may include at least one of the following:

a time domain offset between the second SL positioning reference signal and the first SL positioning reference signal transmitted at least twice is less than or equal to a second time threshold;
a time domain offset between the second SL positioning reference signal and the first SL positioning reference signal transmitted at least twice is less than or equal to a third time threshold; and
sequence IDs of the second SL positioning reference signal and the first SL positioning reference signal transmitted at least twice are different.

In the embodiment of this application, the second SL positioning reference signal and the first SL positioning reference signal transmitted at least twice can be reference signals satisfying different second conditions, so that the terminal can determine the first SL positioning reference signal and the second SL positioning reference signal more flexibly.

Step 202. The first terminal determines first time information and/or second time information.

In an embodiment of this application, the first time information and the second time information are both related to transmission time of the first SL positioning reference signal and/or transmission time of the second SL positioning reference signal.

Optionally, in the embodiment of this application, the first time information and/or the second time information may include transmit timing information and receive timing information of an SL positioning reference signal (one possible implementation), or may include a time difference between the transmit timing and the receive timing of the SL positioning reference signal (another possible implementation).

One possible implementation

Optionally, in an embodiment of this application, the first time information may include at least one of the following:

transmit timing information of the first SL positioning reference signal transmitted by the first terminal; and
receive timing information of the second SL positioning reference signal received by the first terminal;
and/or
the second time information may include at least one of the following:

receive timing information of the first SL positioning reference signal received by the second terminal; and
transmit timing information of the second SL positioning reference signal transmitted by the second terminal.

Optionally, in the embodiment of this application, the transmit timing information of the first SL positioning reference signal transmitted by the first terminal may include transmit timing information of the first SL positioning reference signal transmitted by the first terminal at least twice;
and/or
the receive timing information of the first SL positioning reference signal received by the second terminal may include receive timing information of the first SL positioning reference signal received by the second terminal at least twice.

In the embodiment of this application, the first time information may include the transmit timing information of the first SL positioning reference signal transmitted by the first terminal at least twice, and/or the second time information may include the receive timing information of the first SL positioning reference signal received by the second terminal at least twice. Therefore, the first terminal can determine the first time information and/or the second time information more accurately.

Optionally, in the embodiment of this application, the time information may include at least one of the following: absolute time information and relative time information.

Optionally, in the embodiment of this application, the absolute time information may include universal time coordinated (Universal Time Coordinated, UTC) time information, time information of a base station, or the like.

Optionally, in the embodiment of this application, the relative time information may include at least one of the following:

time information of transmission time of an SL positioning reference signal with respect to a terminal time unit;
time information of the transmission time of the first SL positioning reference signal with respect to the transmission time of the second SL positioning reference signal; and
relative time information between transmission time of the first SL positioning reference signal transmitted at least twice.

Optionally, in the embodiment of this application, the relative time information may further include time information of the transmission time of the SL positioning reference signal with respect to a terminal subframe.

Optionally, in the embodiment of this application, the transmission time may include at least one of the following: receive timing and transmit timing.

In the embodiment of this application, the relative time information may include different time information, so that the first terminal can determine the first time information and/or the second time information more flexibly.

In the embodiment of this application, the time information may include at least one of absolute time information and relative time information, so that the first terminal can determine the first time information and/or the second time information more flexibly.

Optionally, in the embodiment of this application, the time information may include at least one of the following: a subframe and a slot unit.

The subframe is a subframe corresponding to a terminal, and the slot unit is a time unit corresponding to a terminal. SCS associated with the slot unit is either of the following: SL bandwidth part (Bandwidth Part, BWP) and SCS for transmitting an SL positioning reference signal.

Optionally, in the embodiment of this application, if the time information includes a subframe, the transmit timing information of the SL positioning reference signal may be an offset of the subframe for transmitting the SL positioning reference signal with respect to the subframe for receiving the SL positioning reference signal.

Optionally, in the embodiment of this application, if the time information includes a subframe, the receive timing information of the SL positioning reference signal may be an offset of the subframe for receiving the SL positioning reference signal with respect to a downlink subframe.

Optionally, in the embodiment of this application, a unit of the time information may include at least one of the following: K1 TSs and K2 TCs.

K1 and K2 are both greater than or equal to 1, and TS and TC are reciprocals of a product of subcarrier spacing and carrier quantity. For example, TS is 1/2048/15000 and TC is 1/480000/4096.

Optionally, in the embodiment of this application, if the time information is in units of TS or TC, the receive timing information of the SL positioning reference signal may be the offset of the subframe for receiving the SL positioning reference signal with respect to a downlink subframe, in units of TS or TC.

In the embodiment of this application, the time information may include at least one of a subframe corresponding to the terminal and a time unit corresponding to the terminal, so that the first terminal can determine the first time information and/or the second time information more flexibly.

Optionally, in the embodiment of this application, the time information is receive timing information, where the time information may include at least one of the following:

receive timing information associated with a first detected path (namely, first detected path); and
receive timing information associated with L detected paths; where
L is a positive integer.

Optionally, in the embodiment of this application, if the second time information includes the receive timing information of the first SL positioning reference signal received by the second terminal at least twice, the receive timing information may be the receive timing information associated with the first detected path for the first SL positioning reference signal received by the second terminal, or may be the receive timing information associated with the L-th detected path of the first SL positioning reference signal received by the second terminal.

In the embodiment of this application, when the time information is receive timing information, the time information may include at least one of the receive timing information associated with the first detected path and the receive timing information associated with L detected paths, so that the first terminal can determine the first time information and/or the second time information more flexibly.

The positioning method provided in the embodiment of this application will be illustrated with reference to the accompanying drawings.

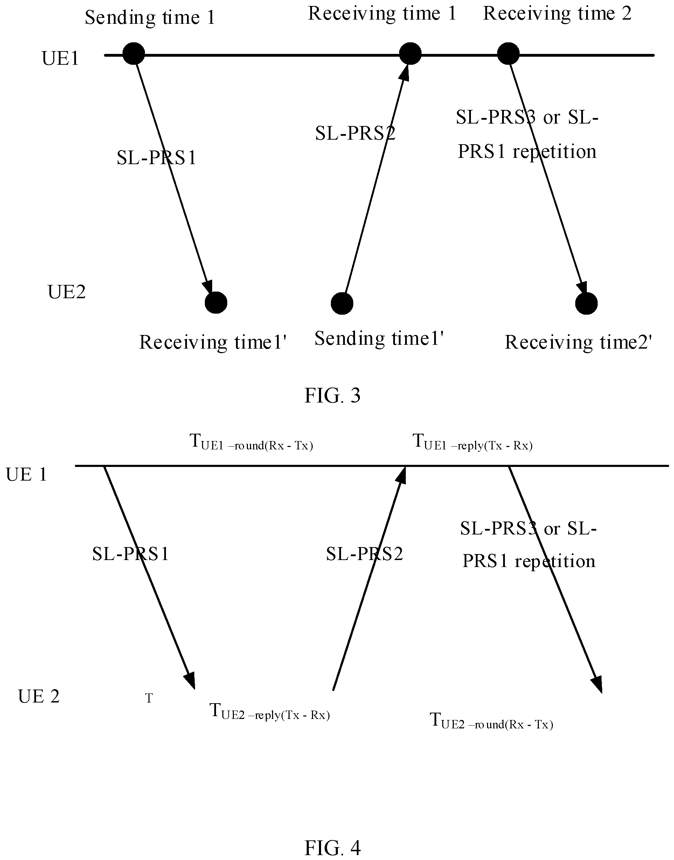

For example, as shown in FIG. 3, user equipment (User Equipment, UE) 1 (namely, the first terminal) transmits SL-PRS1 and SL-PRS3 (that is, transmits the first SL positioning reference signal at least twice) to UE2 (namely, the second terminal) within the first time, or transmits SL-PRS1 to UE2 twice within the first time, and receives SL-PRS2 (namely, the second SL positioning reference signal) from UE2. In this way, UE1 can determine that the first time information includes at least one of transmit timing 1 of SL-PRS1 transmitted by UE1, transmit timing 2 of SL-PRS3 transmitted by UE1 (or SL-PRS1 transmitted for the second time, namely, SL-PRS1 repetition), and receive timing 1 of SL-PRS2 received by UE1; and/or UE1 can determine that the second time information includes at least one of receive timing 1' of SL-PRS1 received by UE2, receive timing 2' of SL-PRS3 received by UE2 (or SL-PRS1 repetition), and transmit timing 1' of SL-PRS2 transmitted by UE2.

In the embodiment of this application, the first time information may include at least one of the transmit timing information of the first SL positioning reference signal transmitted by the first terminal and the receive timing information of the second SL positioning reference signal received by the first terminal; and/or the second time information may include at least one of the receive timing information of the first SL positioning reference signal received by the second terminal and the transmit timing information of the second SL positioning reference signal transmitted by the second terminal. This can enrich the first time information and the second time information.

Another possible implementation

Optionally, in an embodiment of this application, the first time information may include:

(a). a time difference between receive timing of the second SL positioning reference signal received by the first terminal and transmit timing of the first SL positioning reference signal transmitted by the first terminal;
and/or
the second time information may include at least one of the following:
(b). a time difference between receive timing of the first SL positioning reference signal received by the second terminal and transmit timing of the second SL positioning reference signal transmitted by the second terminal; and
(c). a time difference between transmit timing of the second SL positioning reference signal transmitted by the second terminal and receive timing of the first SL positioning reference signal received by the second terminal.

Optionally, in the embodiment of this application, the second time information may include (b) and (c). In this case, (b) may be the time difference between the receive timing of the first SL positioning reference signal received by the second terminal and the transmit timing of the second SL positioning reference signal transmitted by the second terminal; and (c) may be the time difference between the transmit timing of the second SL positioning reference signal transmitted by the second terminal and the receive timing of the first SL positioning reference signal received by the second terminal.

Optionally, in the embodiment of this application, the time difference between the receive timing of the second SL positioning reference signal received by the first terminal and the transmit timing of the first SL positioning reference signal transmitted by the first terminal may be a time difference between the receive timing of the second SL positioning reference signal received by the first terminal and the transmit timing of the first SL positioning reference signal transmitted by the first terminal at least twice.

Optionally, in the embodiment of this application, the time difference between the receive timing of the second SL positioning reference signal received by the first terminal and the transmit timing of the first SL positioning reference signal transmitted by the first terminal may be a time difference between the receive timing of the second SL positioning reference signal received by the first terminal and the transmit timing of the first SL positioning reference signal transmitted by the first terminal for the first time.

It can be understood that in a case that the time information includes a subframe, the time difference between the time when the first terminal receives the second SL positioning reference signal and the transmit timing of the first SL positioning reference signal transmitted by the first terminal may be an offset of the subframe for receiving the SL positioning reference signal with respect to the subframe for transmitting the SL positioning reference signal.

Optionally, in the embodiment of this application, the unit of the time information may include at least one of the following: K3 TSs and K4 TCs, where both K3 and K4 are greater than or equal to 1.

Optionally, in the embodiment of this application, if the time information is in units of TS or TC, the time difference between the time when the first terminal receives the second SL positioning reference signal and the transmit timing of the first SL positioning reference signal transmitted by the first terminal may be an offset of the subframe for receiving the second SL positioning reference signal with respect to the subframe for transmitting the first SL positioning reference signal, in units of TS or TC.

Optionally, in the embodiment of this application, the time information may include L1 subframes, M slots, and K TSs, where L1, M, and K are all greater than or equal to 1.

Optionally, in the embodiment of this application, the time information can be mapped into milliseconds ms.

Optionally, in the embodiment of this application, the time difference between the time when the first terminal receives the second SL positioning reference signal and the transmit timing of the first SL positioning reference signal transmitted by the first terminal may be a time difference between the receive timing information associated with the first detected path of the time when the first terminal receives the second SL positioning reference signal and the transmit timing of the first SL positioning reference signal transmitted by the first terminal, or may be a time difference between the receive timing information associated with the L-th detected path of the time when the first terminal receives the second SL positioning reference signal and the transmit timing of the first SL positioning reference signal transmitted by the first terminal.

Optionally, in the embodiment of this application, the time difference between the receive timing of the first SL positioning reference signal received by the second terminal and the transmit timing of the second SL positioning reference signal transmitted by the second terminal may be a time difference between the receive timing of the first SL positioning reference signal received by the second terminal for the first time and the transmit timing of the second SL positioning reference signal transmitted by the second terminal.

Optionally, in the embodiment of this application, the time difference between the receive timing of the first SL positioning reference signal received by the second terminal and the transmit timing of the second SL positioning reference signal transmitted by the second terminal may be a time difference between the receive timing of the first SL positioning reference signal received by the second terminal for the second time and the transmit timing of the second SL positioning reference signal transmitted by the second terminal.

Optionally, in the embodiment of this application, the time difference between the transmit timing of the second SL positioning reference signal transmitted by the second terminal and the receive timing of the first SL positioning reference signal received by the second terminal may be a time difference between the transmit timing of the second SL positioning reference signal transmitted by the second terminal and the receive timing of the first SL positioning reference signal received by the second terminal for the second time.

Optionally, in the embodiment of this application, the time difference between the transmit timing of the second SL positioning reference signal transmitted by the second terminal and the receive timing of the first SL positioning reference signal received by the second terminal may be a time difference between the transmit timing of the second SL positioning reference signal transmitted by the second terminal and the receive timing of the first SL positioning reference signal received by the second terminal for the first time.

In the embodiment of this application, the first time information and/or the second time information may include the time difference between the transmit timing of an SL positioning reference signal transmitted within the first time and the receive timing of a received SL positioning reference signal. This can further enrich the first time information and the second time information.

Optionally, in the embodiment of this application, the first time information may further include: (d) a time difference between the transmit timing of the first SL positioning reference signal transmitted by the first terminal and the receive timing of the second SL positioning reference signal received by the first terminal.

Optionally, in the embodiment of this application, the first time information may include (a) and (d). In this case, (a) may be the time difference between the receive timing of the second SL positioning reference signal received by the first terminal and the transmit timing of the first SL positioning reference signal transmitted by the first terminal for the first time; (d) may be the time difference between the transmit timing of the first SL positioning reference signal transmitted by the first terminal for the second time and the receive timing of the second SL positioning reference signal received by the first terminal.

Optionally, in the embodiment of this application, the time difference between the transmit timing of the first SL positioning reference signal transmitted by the first terminal and the receive timing of the second SL positioning reference signal received by the first terminal may be the time difference between the transmit timing of the first SL positioning reference signal transmitted by the first terminal for the second time and the receive timing of the second SL positioning reference signal received by the first terminal.

Optionally, in the embodiment of this application, the time difference between the transmit timing of the first SL positioning reference signal transmitted by the first terminal and the receive timing of the second SL positioning reference signal received by the first terminal may be the time difference between the transmit timing of the first SL positioning reference signal transmitted by the first terminal for the first time and the receive timing of the second SL positioning reference signal received by the first terminal.

In the embodiment of this application, the first time information may further include the time difference between the transmit timing of the first SL positioning reference signal transmitted by the first terminal within the first time and the receive timing of the second SL positioning reference signal received by the first terminal. This can enrich the first time information.

The positioning method provided in the embodiment of this application will be illustrated with reference to the accompanying drawings.

For example, as shown in FIG. 4, UE1 (namely, the first terminal) transmits SL-PRS1 and SL-PRS3 (that is, transmits the first SL positioning reference signal at least twice) to UE2 (namely, the second terminal) within the first time, or transmits SL-PRS1 to UE2 twice within the first time, and receives SL-PRS2 (namely, the second SL positioning reference signal) from UE2. In this way, UE1 can determine that the first time information includes at least one of the following: a time difference $T_{UE1-round}$ between the receive timing of SL-PRS2 received by UE1 and the transmit timing of SL-PRS1 transmitted by UE1, and a time difference $T_{UE1-reply}$ between the transmit timing of SL-PRS3 transmitted by UE1 (or SL-PRS1 repetition) and the receive timing of the SL-PRS2 received by UE1; and/or UE1 can determine that the second time information includes at least one of the following: a time difference $T_{UE2-reply}$ between the transmit timing of SL-PRS2 transmitted by UE2 and the receive timing of SL-PRS1 received by UE2, and a time difference $T_{UE2-round}$ between the receive timing of SL-PRS3 received by UE2 (or SL-PRS1 repetition) and the transmit timing of SL-PRS2 transmitted by UE2.

In the positioning method provided in the embodiment of this application, the first terminal can determine, through transmission of SL positioning reference signals with the second terminal, the time information related to the transmission time of the first SL positioning reference signal and the transmission time of the second SL positioning reference signal. In other words, the time information related to the transmission time of SL positioning reference signals transmitted between the two terminals in a double-sided two-way manner can be determined. Therefore, this method can eliminate the synchronization error and alleviate the impact of the clock error during terminal positioning, thereby improving the positioning accuracy.

Optionally, in an embodiment of this application, after the step 202, the positioning method provided in the embodiment of this application may further include the following step 203.

Step 203. The first terminal determines first information based on the first time information and/or the second time information.

In the embodiment of this application, the first information is used for determining location information of the first terminal and/or the second terminal.

Optionally, in the embodiment of this application, the first information may include at least one of the following:

identification information of the first terminal;
first time information;
first time stamp information;
identification information of the first SL positioning reference signal;

identification information of the second SL positioning reference signal;
RSRP of the second SL positioning reference signal; and
first line of sight (line of sight, LOS) indicator information.

The first time stamp information is used to indicate a time stamp associated with the first time information.

Optionally, in the embodiment of this application, the identification information of a terminal may include source (namely, node) ID, destination (namely, destination) ID, member (member) ID, a predefined ID, or the like.

Optionally, in the embodiment of this application, the identification information of the first terminal may be used to indicate that the first time information is time information received or transmitted by the first terminal, so as to obtain more characteristics related to the SL positioning reference signals or characteristics related to the foregoing time information.

Optionally, in the embodiment of this application, the first terminal may transmit the determined first time information to another communications device, so as to calculate third time information or location information.

Optionally, in the embodiment of this application, the LOS indicator information may be used to indicate that the first time information is an associated LOS or NLOS, or may be used to indicate that the foregoing SL positioning reference signals are associated LOS or NLOS.

In the embodiment of this application, the first information may include at least one of the following: identification information of the first terminal, first time information, first time stamp information, identification information of the first SL positioning reference signal, identification information of the second SL positioning reference signal, RSRP of the second SL positioning reference signal, and first LOS indicator information. This can enrich the first information, so as to obtain more characteristics related to the SL positioning reference signal or time information.

Optionally, in the embodiment of this application, the first information may include at least one of the following:

identification information of the first terminal;
identification information of the second terminal;
third time information;
second time stamp information;
identification information of the first SL positioning reference signal;
identification information of the second SL positioning reference signal;
RSRP of the second SL positioning reference signal; and
first LOS indicator information.

The third time information is used to indicate a first parameter used between the first terminal and the second terminal, the first parameter includes transmission delay or relative distance, and the second time stamp information is used to indicate a time stamp associated with the third time information.

Optionally, in the embodiment of this application, the first terminal can calculate the location information or determine the third time information. In this case, the first terminal needs to first obtain second information determined by the second terminal, so as to determine the first information.

In the embodiment of this application, the first information may include at least one of the following: identification information of the first terminal, identification information of the second terminal, third time information, second time stamp information, identification information of the first SL positioning reference signal, identification information of the second SL positioning reference signal, RSRP of the second SL positioning reference signal, and first LOS indicator information. This can enrich the first information and improve the flexibility of determining the location information of the first terminal and/or the second terminal, thereby facilitating positioning.

Optionally, in the embodiment of this application, the location information may include at least one of the following:

relative location information;
absolute location information;
relative distance information; and
relative angle information.

It can be understood that the location information may indicate the geographical location of the first terminal and/or the second terminal.

Optionally, in the embodiment of this application, the relative location information may be a relative location between the first terminal and the second terminal.

Optionally, in the embodiment of this application, the relative location information may be a relative position between the location of the first terminal or location of the second terminal and a reference location.

Optionally, in the embodiment of this application, the relative distance may be a relative distance between the first terminal and the second terminal.

Optionally, in the embodiment of this application, the relative angle may be a relative angle between the first terminal and the second terminal.

Optionally, in the embodiment of this application, the relative angle may be a relative angle between a reference angle and the relative angle between the first terminal and the second terminal.

In the embodiment of this application, the location information may include at least one of the relative location information, absolute location information, relative distance information, and relative angle information. This can enrich the location information and improve the positioning flexibility.

In the embodiment of this application, the first terminal can determine, based on the first time information and/or the second time information, the first information for determining the location information of the first terminal and/or the second terminal, so that the first terminal can determine the first information more flexibly.

Optionally, in an embodiment of this application, before the step 203, the positioning method provided in the embodiment of this application may further include the following step 204.

Step 204. The first terminal receives second information from the second terminal.

In the embodiment of this application, the second information may include at least one of the following:

identification information of the second terminal;
second time information;
third time stamp information;
identification information of the first SL positioning reference signal;
identification information of the second SL positioning reference signal;
RSRP of the second SL positioning reference signal; and
second LOS indicator information.

The third time stamp information is used to indicate a time stamp associated with the second time information.

In the embodiment of this application, the first terminal can receive the second information from the second terminal before determining the first information. In this way, location information determined by two terminals can be exchanged, thereby further improving the positioning accuracy.

Optionally, in an embodiment of this application, after the step 203, the positioning method provided in the embodiment of this application may further include the following step 205.

Step 205. The first terminal transmits the first information to a first communications device.

In the embodiment of this application, the first communications device may include at least one of the following:

the second terminal;
a scheduling terminal; and
a network-side device.

In the embodiment of this application, the first terminal can transmit the first information to at least one of the second terminal, scheduling terminal, and network-side device after determining the first information. This can enrich the objects to which the first terminal transmits the first information, improving the exchange performance of the first terminal.

Optionally, in an embodiment of this application, before the step 201, the positioning method provided in the embodiment of this application may further include the following step 206.

Step 206. The first terminal exchanges target information with a network-side device.

In the embodiment of this application, exchange of the target information may include at least one of the following:

exchange of capability information;
exchange of assistance information;
exchange of first location information; and
exchange of SL positioning reference signal request information.

Optionally, in the embodiment of this application, exchange of the capability information may be used to indicate whether the first terminal supports determining location information of the first terminal and/or the second terminal; exchange of the assistance information may be used for the first terminal to receive preconfigured information for at least two transmissions of an SL positioning reference signal; exchange of the first location information may be used for exchanging location information of the first terminal and/or location information of the second terminal; and the SL positioning reference signal request information may include a scheduling or transmission request for at least two transmissions of an SL positioning reference signal.

In the embodiment of this application, the first terminal can perform various exchanges with the network-side device for different exchange purposes, so that the first terminal can exchange target information with the network-side device more flexibly.

Optionally, in the embodiment of this application, the preconfigured information for at least two transmissions of an SL positioning reference signal includes at least one of the following:

frequency domain information for transmitting the SL positioning reference signal;
time domain information for transmitting the SL positioning reference signal;
sequence information for transmitting the SL positioning reference signal; and
power information for transmitting the SL positioning reference signal.

Optionally, in the embodiment of this application, the frequency domain information may include at least one of the following: bandwidth, starting frequency domain position, and comb value.

Optionally, in the embodiment of this application, the time domain information may include at least one of the following: time unit position, time unit gap, symbol position, symbol length, and period.

Optionally, in the embodiment of this application, the sequence information may include sequence identification information.

Optionally, in the embodiment of this application, the power information may include at least one of the following: alpa (alpha) power coefficient, transmission power, and maximum power.

In the embodiment of this application, the preconfigured information for at least two transmissions of an SL positioning reference signal includes at least one of the following: frequency domain information for transmitting the SL positioning reference signal, time domain information for transmitting the SL positioning reference signal, sequence information for transmitting the SL positioning reference signal, and power information for transmitting the SL positioning reference signal. This can enrich the preconfigured information for at least two transmissions of the SL positioning reference signal.

Optionally, in the embodiment of this application, the preconfigured information for at least two transmissions of an SL positioning reference signal includes at least one of the following:

number of transmissions of the SL positioning reference signal;
time domain information for at least two transmissions of the SL positioning reference signal;
frequency domain information for at least two transmissions of the SL positioning reference signal; and
power information for at least two transmissions of the SL positioning reference signal.

Optionally, in the embodiment of this application, the time domain information may include at least one of the following: time unit position and time unit gap.

Optionally, in the embodiment of this application, the frequency domain information may include information indicating whether the frequency domain information for the at least two transmissions is the same.

Optionally, in the embodiment of this application, the power information may include at least one of the following: change of alpa power coefficient, change of transmission power, and change of maximum power.

Optionally, in the embodiment of this application, if the preconfigured information for at least two transmissions of the SL positioning reference signal includes the time domain information for at least two transmissions of the SL positioning reference signal, the time domain information for the received second SL positioning reference signal is between the time domain information for the first SL positioning reference signal transmitted at least twice.

In the embodiment of this application, the preconfigured information for at least two transmissions of the SL positioning reference signal may include at least one of the following: number of transmissions of the SL positioning reference signal, time domain information for at least two transmissions of the SL positioning reference signal, frequency domain information for at least two transmissions of the SL positioning reference signal, and power information for at least two transmissions of the SL positioning reference signal. This can further enrich the preconfigured information for at least two transmissions of the SL positioning reference signal.

In the embodiment of this application, the first terminal can perform at least one of the following exchanges with the network-side device: capability information exchange, assistance information exchange, first location information exchange, and SL positioning reference signal request information exchange. This can improve the performance of exchange between the first terminal and the network-side device, ensuring the positioning accuracy.

Optionally, in an embodiment of this application, after the step 203, the positioning method provided in the embodiment of this application may further include the following step 207.

Step 207. The first terminal exchanges second location information with the second terminal.

In the embodiment of this application, exchange of the second location information is used for exchanging the first information or exchanging location information determined based on the first information.

In the embodiment of this application, the first terminal can exchange with the second terminal on the first information or the location information determined based on the first information. Therefore, two-way information of terminals on both sides can be used during positioning, further improving the positioning accuracy.

The positioning method provided in the embodiment of this application will be illustrated with reference to the accompanying drawings.

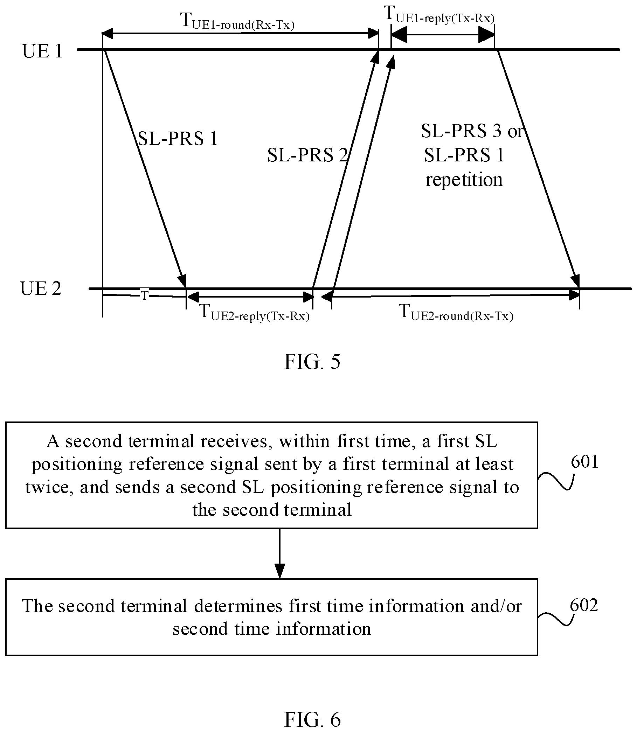

For example, as shown in FIG. 5, UE1 (namely, the first terminal) transmits SL-PRS1 and SL-PRS3 (that is, transmits the first SL positioning reference signal at least twice) to UE2 (namely, the second terminal) within the first time, or transmits SL-PRS1 to UE2 twice within the first time and receives SL-PRS2 (namely, the second SL positioning reference signal) twice from UE2. In this way, UE1 can determine the first time information and/or the second time information, and can determine, based on the first time information and/or the second time information, the first information for determining the location information of UE1 and/or UE2.

Optionally, in the embodiment of this application, UE1 transmits the first SL positioning reference signal to UE2 at least twice and receives the second SL positioning reference signal transmitted by UE2 at least twice. Therefore, at least two SL positioning reference signal resources scheduled by one SCI can include the first SL positioning reference signal resource and the second SL positioning reference signal resource.

It should be noted that in actual implementation, UE2 can transmit the second SL positioning reference signal at least twice, and the second SL positioning reference signals transmitted at least twice may be the same reference signal or different reference signals. The second SL positioning reference signal transmitted by UE2 may be a reference signal the same as or different from the first SL positioning reference signal transmitted by UE1. The time interval for UE2 to transmit the second SL positioning reference signal at least twice may be less than or equal to a fourth time threshold, which is not limited in the embodiments of this application.

An embodiment of this application provides a positioning method, and FIG. 6 shows a flowchart of the positioning method provided in the embodiment of this application. As shown in FIG. 6, the positioning method provided in the embodiment of this application may include the following step 601 and step 602.

Step 601. A second terminal receives, within first time, a first SL positioning reference signal transmitted by a first terminal at least twice, and transmits a second SL positioning reference signal to the second terminal.

Step 602. The second terminal determines first time information and/or second time information.

In an embodiment of this application, the first time information and the second time information are both related to transmission time of the first SL positioning reference signal and/or transmission time of the second SL positioning reference signal.

In the positioning method provided in the embodiment of this application, the second terminal can determine, through transmission of SL positioning reference signals with the second terminal, the time information related to the transmission time of the first SL positioning reference signal and the transmission time of the second SL positioning reference signal. In other words, the time information related to the transmission time of SL positioning reference signals transmitted between the two terminals in a double-sided two-way manner can be determined. Therefore, this method can eliminate the synchronization error and alleviate the impact of the clock error during terminal positioning, thereby improving the positioning accuracy.

Optionally, in an embodiment of this application, after the step 602, the positioning method provided in the embodiment of this application may further include the following step 603.

Step 603. The second terminal determines second information based on the first time information and/or the second time information.

In the embodiment of this application, the second information is used for determining location information of the first terminal and/or the second terminal.

In the embodiment of this application, the second terminal can determine, based on the first time information and/or the second time information, the second information for determining the location information of the first terminal and/or the second terminal, so that the second terminal can determine the second information more flexibly.

Optionally, in an embodiment of this application, before the step 603, the positioning method provided in the embodiment of this application may further include the following step 604.

Step 604. The second terminal receives first information from the first terminal.

In the embodiment of this application, the second terminal can receive the first information from the first terminal before determining the second information. In this way, location information determined by two terminals can be exchanged, thereby further improving the positioning accuracy.

Optionally, in an embodiment of this application, after the step 603, the positioning method provided in the embodiment of this application may further include the following step 605.

Step 605. The second terminal transmits the second information to a first communications device.

In the embodiment of this application, the first communications device may include at least one of the following:

the first terminal;
a scheduling terminal; and

a network-side device.

In the embodiment of this application, the second terminal can transmit the second information to at least one of the first terminal, scheduling terminal, and network-side device after determining the second information. This can enrich the objects to which the second terminal transmits the second information, improving the exchange performance of the first terminal.

Optionally, in an embodiment of this application, before the step 601, the positioning method provided in the embodiment of this application may further include the following step 606.

Step 606. The second terminal exchanges target information with a network-side device.

In the embodiment of this application, exchange of the target information may include at least one of the following:

exchange of capability information;
exchange of assistance information;
exchange of third location information; and
exchange of SL positioning reference signal request information.

In the embodiment of this application, the second terminal can perform at least one of the following exchanges with the network-side device: capability information exchange, assistance information exchange, third location information exchange, and SL positioning reference signal request information exchange. This can improve the performance of exchange between the second terminal and the network-side device, ensuring the positioning accuracy.

Optionally, in an embodiment of this application, after the step 603, the positioning method provided in the embodiment of this application may further include the following step 607.

Step 607. The second terminal exchanges fourth location information with the first terminal.

In the embodiment of this application, exchange of the fourth location information is used for exchanging the second information or exchanging location information determined based on the second information.

In the embodiment of this application, the second terminal can exchange with the second terminal on the second information or the location information determined based on the second information. Therefore, two-way information of terminals on both sides can be used during positioning, further improving the positioning accuracy.

Specific descriptions in the embodiments of this application and technical effects that can be achieved by each technical feature are provided in the foregoing embodiments and are not repeated herein to avoid repetition.

The positioning method provided in the embodiment of this application may be performed by a positioning apparatus or a control module for performing the positioning method in the positioning apparatus. In the embodiments of this application, the positioning method being performed by the positioning apparatus is used as an example to describe the positioning apparatus according to an embodiment of this application.

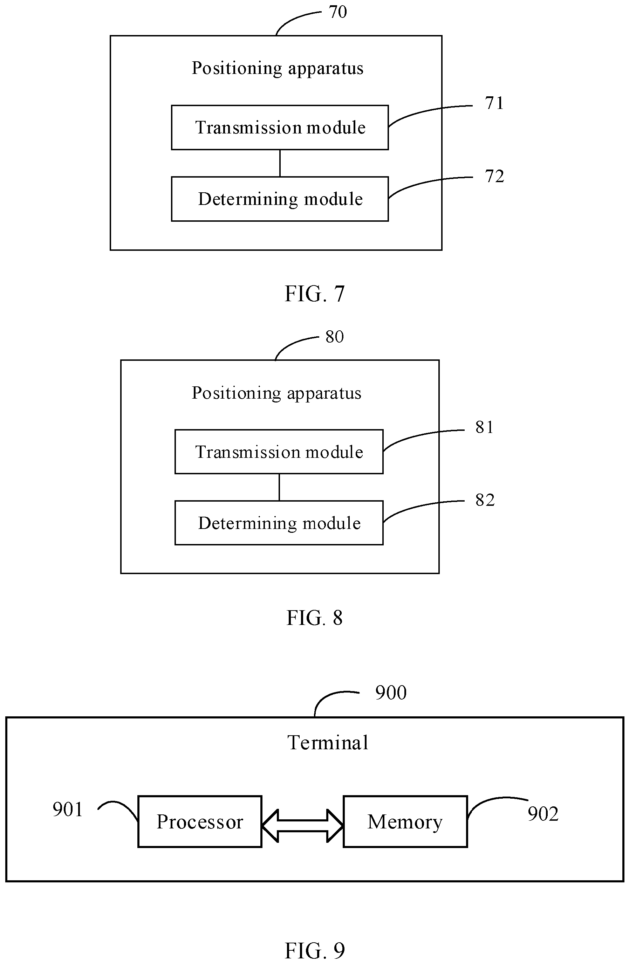

With reference to FIG. 7, an embodiment of this application provides a positioning apparatus 70, where the positioning apparatus 70 may include a transmission module 71 and a determining module 72. The transmission module 71 is configured to transmit a first SL positioning reference signal to a second terminal at least twice within first time and receive a second SL positioning reference signal from the second terminal. The determining module 72 may be configured to determine first time information and/or second time information, where the first time information and the second time information are both related to transmission time of the first SL positioning reference signal and/or transmission time of the second SL positioning reference signal.

In a possible implementation, the determining module 72 may be further configured to determine, after determining the first time information and/or the second time information, first information based on the determined first time information and/or second time information, where the first information is used for determining location information of the first terminal and/or the second terminal.

In a possible implementation, the first time information may include at least one of the following: transmit timing information of the first SL positioning reference signal transmitted by the first terminal; and receive timing information of the second SL positioning reference signal received by the first terminal; and/or, the second time information may include at least one of the following: receive timing information of the first SL positioning reference signal received by the second terminal; and transmit timing information of the second SL positioning reference signal transmitted by the second terminal.

In a possible implementation, the first time information may include a time difference between receive timing of the second SL positioning reference signal received by the first terminal and transmit timing of the first SL positioning reference signal transmitted by the first terminal; and/or, the second time information may include at least one of the following: a time difference between receive timing of the first SL positioning reference signal received by the second terminal and transmit timing of the second SL positioning reference signal transmitted by the second terminal; and a time difference between transmit timing of the second SL positioning reference signal transmitted by the second terminal and receive timing of the first SL positioning reference signal received by the second terminal.

In a possible implementation, the first time information may further include a time difference between transmit timing of the first SL positioning reference signal transmitted by the first terminal and receive timing of the second SL positioning reference signal received by the first terminal.

In a possible implementation, the transmit timing information of the first SL positioning reference signal transmitted by the first terminal may include transmit timing information of the first SL positioning reference signal transmitted by the first terminal at least twice; and/or, the receive timing information of the first SL positioning reference signal received by the second terminal may include receive timing information of the first SL positioning reference signal received by the second terminal at least twice.

In a possible implementation, the time information may include at least one of the following: absolute time information and relative time information.

In a possible implementation, the relative time information may include at least one of the following: time information of transmission time of an SL positioning reference signal with respect to a terminal time unit; time information of the transmission time of the first SL positioning reference signal with respect to the transmission time of the second SL positioning reference signal; and relative time information between transmission time of the first SL positioning reference signal transmitted at least twice.

In a possible implementation, the time information may include at least one of the following: a subframe and a slot unit; where the subframe is a subframe corresponding to a terminal, the slot unit is a time unit corresponding to a terminal, and SCS associated with the slot unit is either of the following: SL BWP and SCS for transmitting an SL positioning reference signal.

In a possible implementation, the time information is receive timing information, and the time information may include at least one of the following: receive timing information associated with a first detected path and receive timing information associated with L detected paths, where L is a positive integer.

In a possible implementation, the first information may include at least one of the following: identification information of the first terminal, first time information, first time stamp information, identification information of the first SL positioning reference signal, identification information of the second SL positioning reference signal, RSRP of the second SL positioning reference signal, and first LOS indicator information, where the first time stamp information is used to indicate a time stamp associated with the first time information.

In a possible implementation, the first information may include at least one of the following: identification information of the first terminal, identification information of the second terminal, third time information, second time stamp information, identification information of the first SL positioning reference signal, identification information of the second SL positioning reference signal, RSRP of the second SL positioning reference signal, and first LOS indicator information, where the third time information is used to indicate a first parameter used between the first terminal and the second terminal, the first parameter includes transmission delay or relative distance, and the second time stamp information is used to indicate a time stamp associated with the third time information.

In a possible implementation, the first SL positioning reference signals transmitted by the first terminal at least twice have the same sequence or the same signal identification information; or the first SL positioning reference signals transmitted by the first terminal at least twice are different.

In a possible implementation, the first SL positioning reference signal transmitted by the first terminal at least twice may include at least one of the following: at least two SL positioning reference signal resources scheduled by one SCI, one SL positioning reference signal group containing at least two SL positioning reference signal resources, an SL positioning reference signal transmitted repeatedly at least twice, at least two SL positioning reference signal resources scheduled separately, and at least two SL positioning reference signal resources required for scheduling or request as indicated by indication information.

In a possible implementation, an interval between transmit timing of the second SL positioning reference signal and transmit timing of the first SL positioning reference signal is greater than or equal to a first time threshold.

In a possible implementation, receive timing of at least one of the second SL positioning reference signals received by the first terminal is between transmit timing of the first SL positioning reference signal transmitted by the first terminal at least twice.

In a possible implementation, the first SL positioning reference signal transmitted at least twice, and/or the first SL positioning reference signal and the second SL positioning reference signal both can satisfy a first condition. The first condition may include at least one of the following: bandwidths used for transmitting SL positioning reference signals are the same; starting frequency domain positions used for transmitting SL positioning reference signals are the same; periodicities for transmitting SL positioning reference signals are the same; symbols used for transmitting SL positioning reference signals are the same; comb values used for transmitting SL positioning reference signals are the same; SCSs used for transmitting SL positioning reference signals are the same; and sequence IDs used for transmitting SL positioning reference signals are the same.

In a possible implementation, the second SL positioning reference signal and the first SL positioning reference signal transmitted at least twice can satisfy a second condition. The second condition may include at least one of the following: a time domain offset between the second SL positioning reference signal and the first SL positioning reference signal transmitted at least twice is less than or equal to a second time threshold; a time domain offset between the second SL positioning reference signal and the first SL positioning reference signal transmitted at least twice is less than or equal to a third time threshold; and sequence IDs of the second SL positioning reference signal and the first SL positioning reference signal transmitted at least twice are different.

In a possible implementation, the first time may include at least one of the following: a time range preconfigured by a network side, a time range defined by a protocol, at least one time unit scheduled with respect to the first SL positioning reference signal transmitted for the first time, at least one time unit with respect to the first SL positioning reference signal transmitted for the first time, a time window preconfigured by a network side, and a time window defined by a protocol, where the time window includes at least one of start time information and window length.

In a possible implementation, the location information may include at least one of the following: relative location information, absolute location information, relative distance information, and relative angle information.

In a possible implementation, the transmission module 71 may be further configured to receive second information from the second terminal before the determining module 72 determines the first information, where the second information may include at least one of the following: identification information of the second terminal, second time information, third time stamp information, identification information of the first SL positioning reference signal, identification information of the second SL positioning reference signal; RSRP of the second SL positioning reference signal, and second LOS indicator information, where the third time stamp information is used to indicate a time stamp associated with the second time information.

In a possible implementation, the transmission module 71 may be further configured to transmit the first information to a first communications device after the determining module 72 determines the first information, where the first communications device may include at least one of the following: the second terminal; a scheduling terminal, and a network-side device.

In a possible implementation, the transmission module 71 may be further configured to exchange target information with a network-side device before transmitting a first SL positioning reference signal to a second terminal at least twice within first time. Exchange of the target information may include at least one of the following: exchange of capability information, exchange of assistance information, exchange of first location information, and exchange of SL positioning reference signal request information.

In a possible implementation, exchange of the capability information may be used to indicate whether to support determining location information of the first terminal and/or the second terminal; exchange of the assistance information may be used for receiving preconfigured information for at least two transmissions of an SL positioning reference signal; exchange of the first location information may be used for exchanging location information of the first terminal and/or location information of the second terminal; and the SL positioning reference signal request information may include a scheduling or transmission request for at least two transmissions of an SL positioning reference signal.

In a possible implementation, the preconfigured information for at least two transmissions of an SL positioning reference signal includes at least one of the following: frequency domain information for transmitting the SL positioning reference signal, time domain information for transmitting the SL positioning reference signal, sequence information for transmitting the SL positioning reference signal, and power information for transmitting the SL positioning reference signal.

In a possible implementation, the preconfigured information for at least two transmissions of the SL positioning reference signal may include at least one of the following: number of transmissions of the SL positioning reference signal, time domain information for at least two transmissions of the SL positioning reference signal, frequency domain information for at least two transmissions of the SL positioning reference signal, and power information for at least two transmissions of the SL positioning reference signal.

In a possible implementation, the transmission module 71 may be further configured to exchange second location information with the second terminal after the determining module 72 determines the first information, where exchange of the second location information may be used for exchanging the first information or exchanging location information determined based on the first information.

In the positioning apparatus provided in the embodiment of this application, the positioning apparatus can determine, through transmission of SL positioning reference signals with the second terminal, the time information related to the transmission time of the first SL positioning reference signal and the transmission time of the second SL positioning reference signal. In other words, the time information related to the transmission time of SL positioning reference signals transmitted between the two terminals in a double-sided two-way manner can be determined. Therefore, this apparatus can eliminate the synchronization error and alleviate the impact of the clock error during terminal positioning, thereby improving the positioning accuracy.

The positioning apparatus according to the embodiment of this application may be an electronic device, for example, an electronic device with an operating system, or may be a component in an electronic device, for example, an integrated circuit or a chip. The electronic device may be a terminal or another device except the terminal. For example, the terminal may include but is not limited to a type of the foregoing terminal 11, and another device may be a server, a network attached storage (Network Attached Storage, NAS), or the like, which is not specifically limited in the embodiments of this application.

The positioning apparatus provided in this embodiment of this application can implement the processes implemented by the method embodiments illustrated in FIG. 2 to FIG. 5, with the same technical effects achieved. To avoid repetition, details are not described herein again.

With reference to FIG. 8, an embodiment of this application provides a positioning apparatus 80, where the positioning apparatus 80 may include a transmission module 81 and a determining module 82. The transmission module 81 may be configured to receive, within first time, a first SL positioning reference signal transmitted by a first terminal at least twice and transmit a second SL positioning reference signal to a second terminal. The determining module 82 may be configured to determine first time information and/or second time information, where the first time information and the second time information are both related to transmission time of the first SL positioning reference signal and/or transmission time of the second SL positioning reference signal.

In a possible implementation, the determining module 82 may be further configured to determine, after determining the first time information and/or the second time information, second information based on the determined first time information and/or second time information, where the second information is used for determining location information of the first terminal and/or the second terminal.

In a possible implementation, the transmission module 81 may be further configured to receive first information from the first terminal before the determining module 82 determines the second information.

In a possible implementation, the transmission module 81 may be further configured to transmit the second information to a first communications device after the determining module 82 determines the second information, where the first communications device may include at least one of the following: the first terminal; a scheduling terminal, and a network-side device.

In a possible implementation, the transmission module 81 may be further configured to exchange target information with a network-side device before receiving, within first time, a first SL positioning reference signal transmitted by a first terminal at least twice. Exchange of the target information may include at least one of the following: exchange of capability information, exchange of assistance information, exchange of third location information, and exchange of SL positioning reference signal request information.

In a possible implementation, the transmission module 81 may be further configured to exchange fourth location information with the first terminal after the determining module 82 determines the second information, where exchange of the fourth location information may be used for exchanging the second information or exchanging location information determined based on the second information.

In the positioning apparatus provided in the embodiment of this application, the positioning apparatus can determine, through transmission of SL positioning reference signals with the first terminal, the time information related to the transmission time of the first SL positioning reference signal and the transmission time of the second SL positioning reference signal. In other words, the time information related to the transmission time of SL positioning reference signals transmitted between the two terminals in a double-sided two-way manner can be determined. Therefore, this apparatus can eliminate the synchronization error and alleviate the impact of the clock error during terminal positioning, thereby improving the positioning accuracy.

The positioning apparatus according to the embodiment of this application may be an electronic device, for example, an electronic device with an operating system, or may be a component in an electronic device, for example, an integrated circuit or a chip. The electronic device may be a terminal or another device except the terminal. For example, the terminal may include but is not limited to a type of the foregoing terminal 11, and another device may be a server, a network attached storage (Network Attached Storage, NAS), or the like, which is not specifically limited in the embodiments of this application.

The positioning apparatus provided in this embodiment of this application can implement the processes implemented by the method embodiment illustrated in FIG. 6, with the same technical effects achieved. To avoid repetition, details are not described herein again.

Optionally, as shown in FIG. 9, an embodiment of this application further provides a terminal 900, including a processor 901 and a memory 902, and a program or instruction is stored in the memory 902 and capable of running on the processor 901. When the program or instruction is executed by the processor 901, the steps of the foregoing positioning method embodiments are implemented, with the same technical effects achieved. To avoid repetition, details are not described herein again.

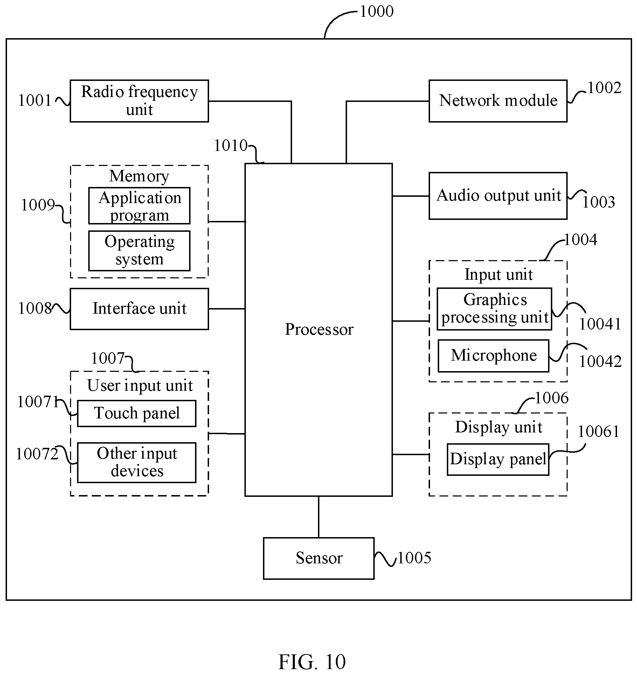

An embodiment of this application further provides a terminal, including a processor and a communications interface, where the communications interface is configured to transmit a first SL positioning reference signal to a second terminal at least twice within first time and receive a second SL positioning reference signal from the second terminal; and the processor is configured to determine first time information and/or second time information; where the first time information and the second time information are both related to transmission time of the first SL positioning reference signal and/or transmission time of the second SL positioning reference signal; and/or, the communications interface is configured to receive, within first time, a first SL positioning reference signal transmitted by a first terminal at least twice and transmit a second SL positioning reference signal to a second terminal; and the processor is configured to determine first time information and/or second time information; where the first time information and the second time information are both related to transmission time of the first SL positioning reference signal and/or transmission time of the second SL positioning reference signal. This terminal embodiment corresponds to the foregoing method embodiments used on the terminal side. All processes and implementations in the foregoing method embodiments are applicable to this terminal embodiment, with the same technical effects achieved. Specifically, FIG. 10 is a schematic diagram of a hardware structure of a terminal implementing the embodiments of this application.

The terminal 1000 includes but is not limited to at least some components of a radio frequency unit 1001, a network module 1002, an audio output unit 1003, an input unit 1004, a sensor 1005, a display unit 1006, a user input unit 1007, an interface unit 1008, a memory 1009, and a processor 1010.

Persons skilled in the art can understand that the terminal 1000 may further include a power source (for example, a battery) for supplying power to the components. The power source may be logically connected to the processor 1010 through a power management system. In this way, functions such as charge management, discharge management, and power consumption management are implemented by using the power management system. The structure of the terminal shown in FIG. 10 does not constitute a limitation on the terminal. The terminal may include more or fewer components than shown in the figure, or combine some components, or have a different component arrangement. Details are not described herein.

It should be understood that in this embodiment of this application, the input unit 1004 may include a graphics processing unit (Graphics Processing Unit, GPU) 10041 and a microphone 10042. The graphics processing unit 10041 processes image data of a static picture or a video that is obtained by an image capture apparatus (for example, a camera) in a video capture mode or an image capture mode. The display unit 1006 may include a display panel 10061. The display panel 10061 may be configured in a form of a liquid crystal display, an organic light-emitting diode, or the like. The user input unit 1007 includes at least one of a touch panel 10071 and other input devices 10072. The touch panel 10071 is also referred to as a touchscreen. The touch panel 10071 may include two parts: a touch detection apparatus and a touch controller. The other input devices 10072 may include but are not limited to a physical keyboard, a functional button (such as a volume control button or a power on/off button), a trackball, a mouse, and a joystick. Details are not described herein again.

In the embodiments of this application, after receiving downlink data from the network-side device, the radio frequency circuit 1001 may transmit it to the processor 1010 for processing. In addition, the radio frequency circuit 1001 may transmit uplink data to the network-side device. Generally, the radio frequency unit 1001 includes but is not limited to an antenna, an amplifier, a transceiver, a coupler, a low noise amplifier, a duplexer, and the like.

The memory 1009 may be configured to store software programs or instructions, and various data. The memory 1009 may mainly include a first storage area where the programs or instructions are stored and a second storage area where data is stored. The first storage area may store an operating system, an application program or instruction required by at least one function (for example, an audio playing function or an image playing function), and the like. Further, the memory 1009 may include a volatile memory or nonvolatile memory, or the memory 1009 may include both volatile and nonvolatile memories. The non-volatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory. The volatile memory may be random access memory (Random Access Memory, RAM), a static random access memory (Static RAM, SRAM), a dynamic random access memory (Dynamic RAM, DRAM), a synchronous dynamic random access memory (Synchronous DRAM, SDRAM), a double data rate synchronous dynamic random access memory (Double Data Rate SDRAM, DDRSDRAM), an enhanced synchronous dynamic random access memory (Enhanced SDRAM, ESDRAM), a synchronous link dynamic random access memory (Synch link DRAM, SLDRAM), and a direct rambus random access memory (Direct Rambus RAM, DRRAM). The memory 1009 in this embodiment of this application includes but is not limited to these and any other suitable types of memories.

The processor 1010 may include one or more processing units. Optionally, the processor 1010 integrates an application processor and a modem processor. The application processor mainly processes operations involving an operating system, a user interface, an application program, and the like. The modem processor mainly processes wireless communication signals, for example, a baseband processor. It can be understood that the modem processor may alternatively be not integrated in the processor 1010.

The radio frequency unit 1001 may be configured to transmit a first SL positioning reference signal to a second terminal at least twice within first time and receive a second SL positioning reference signal from the second terminal. The processor 1010 may be configured to determine first time information and/or second time information, where the first time information and the second time information are both related to transmission time of the first SL positioning reference signal and/or transmission time of the second SL positioning reference signal.

In a possible implementation, the processor 1010 may be further configured to determine, after determining the first time information and/or the second time information, first information based on the determined first time information and/or second time information, where the first information is used for determining location information of the first terminal and/or the second terminal.

In a possible implementation, the first time information may include at least one of the following: transmit timing information of the first SL positioning reference signal transmitted by the first terminal; and receive timing information of the second SL positioning reference signal received by the first terminal; and/or, the second time information may include at least one of the following: receive timing information of the first SL positioning reference signal received by the second terminal; and transmit timing information of the second SL positioning reference signal transmitted by the second terminal.

In a possible implementation, the first time information may include a time difference between receive timing of the second SL positioning reference signal received by the first terminal and transmit timing of the first SL positioning reference signal transmitted by the first terminal; and/or, the second time information may include at least one of the following: a time difference between receive timing of the first SL positioning reference signal received by the second terminal and transmit timing of the second SL positioning reference signal transmitted by the second terminal; and a time difference between transmit timing of the second SL positioning reference signal transmitted by the second terminal and receive timing of the first SL positioning reference signal received by the second terminal.

In a possible implementation, the first time information may further include a time difference between transmit timing of the first SL positioning reference signal transmitted by the first terminal and receive timing of the second SL positioning reference signal received by the first terminal.

In a possible implementation, the transmit timing information of the first SL positioning reference signal transmitted by the first terminal may include transmit timing information of the first SL positioning reference signal transmitted by the first terminal at least twice; and/or, the receive timing information of the first SL positioning reference signal received by the second terminal may include receive timing information of the first SL positioning reference signal received by the second terminal at least twice.

In a possible implementation, the time information may include at least one of the following: absolute time information and relative time information.

In a possible implementation, the relative time information may include at least one of the following: time information of transmission time of an SL positioning reference signal with respect to a terminal time unit; time information of the transmission time of the first SL positioning reference signal with respect to the transmission time of the second SL positioning reference signal; and relative time information between transmission time of the first SL positioning reference signal transmitted at least twice.

In a possible implementation, the time information may include at least one of the following: a subframe and a slot unit; where the subframe is a subframe corresponding to a terminal, the slot unit is a time unit corresponding to a terminal, and SCS associated with the slot unit is either of the following: SL BWP and SCS for transmitting an SL positioning reference signal.

In a possible implementation, the time information is receive timing information, and the time information may include at least one of the following: receive timing information associated with a first detected path and receive timing information associated with L detected paths, where L is a positive integer.

In a possible implementation, the first information may include at least one of the following: identification information of the first terminal, first time information, first time stamp information, identification information of the first SL positioning reference signal, identification information of the second SL positioning reference signal, RSRP of the second SL positioning reference signal, and first LOS indicator information, where the first time stamp information is used to indicate a time stamp associated with the first time information.

In a possible implementation, the first information may include at least one of the following: identification information of the first terminal, identification information of the second terminal, third time information, second time stamp information, identification information of the first SL positioning reference signal, identification information of the second SL positioning reference signal, RSRP of the second SL positioning reference signal, and first LOS indicator information, where the third time information is used to indicate a first parameter used between the first terminal and the second terminal, the first parameter includes transmission delay or relative distance, and the second time stamp information is used to indicate a time stamp associated with the third time information.

In a possible implementation, the first SL positioning reference signals transmitted by the first terminal at least twice have the same sequence or the same signal identification information; or the first SL positioning reference signals transmitted by the first terminal at least twice are different.

In a possible implementation, the first SL positioning reference signal transmitted by the first terminal at least twice may include at least one of the following: at least two SL positioning reference signal resources scheduled by one SCI, one SL positioning reference signal group containing at least two SL positioning reference signal resources, an SL positioning reference signal transmitted repeatedly at least twice, at least two SL positioning reference signal resources scheduled separately, and at least two SL positioning reference signal resources required for scheduling or request as indicated by indication information.

In a possible implementation, an interval between transmit timing of the second SL positioning reference signal and transmit timing of the first SL positioning reference signal is greater than or equal to a first time threshold.

In a possible implementation, receive timing of at least one of the second SL positioning reference signals received by the first terminal is between transmit timing of the first SL positioning reference signal transmitted by the first terminal at least twice.

In a possible implementation, the first SL positioning reference signal transmitted at least twice, and/or the first SL positioning reference signal and the second SL positioning reference signal both can satisfy a first condition. The first condition may include at least one of the following: bandwidths used for transmitting SL positioning reference signals are the same; starting frequency domain positions used for transmitting SL positioning reference signals are the same; periodicities for transmitting SL positioning reference signals are the same; symbols used for transmitting SL positioning reference signals are the same; comb values used for transmitting SL positioning reference signals are the same; SCSs used for transmitting SL positioning reference signals are the same; and sequence IDs used for transmitting SL positioning reference signals are the same.

In a possible implementation, the second SL positioning reference signal and the first SL positioning reference signal transmitted at least twice can satisfy a second condition. The second condition may include at least one of the following: a time domain offset between the second SL positioning reference signal and the first SL positioning reference signal transmitted at least twice is less than or equal to a second time threshold; a time domain offset between the second SL positioning reference signal and the first SL positioning reference signal transmitted at least twice is less than or equal to a third time threshold; and sequence IDs of the second SL positioning reference signal and the first SL positioning reference signal transmitted at least twice are different.

In a possible implementation, the first time may include at least one of the following: a time range preconfigured by a network side, a time range defined by a protocol, at least one time unit scheduled with respect to the first SL positioning reference signal transmitted for the first time, at least one time unit with respect to the first SL positioning reference signal transmitted for the first time, a time window preconfigured by a network side, and a time window defined by a protocol, where the time window includes at least one of start time information and window length.

In a possible implementation, the location information may include at least one of the following: relative location information, absolute location information, relative distance information, and relative angle information.

In a possible implementation, the radio frequency unit 1001 may be further configured to receive second information from the second terminal before the processor 1010 determines the first information, where the second information may include at least one of the following: identification information of the second terminal, second time information, third time stamp information, identification information of the first SL positioning reference signal, identification information of the second SL positioning reference signal; RSRP of the second SL positioning reference signal, and second LOS indicator information, where the third time stamp information is used to indicate a time stamp associated with the second time information.

In a possible implementation, the radio frequency unit 1001 may be further configured to transmit the first information to a first communications device after the processor 1010 determines the first information, where the first communications device may include at least one of the following: the second terminal; a scheduling terminal, and a network-side device.

In a possible implementation, the radio frequency unit 1001 may be further configured to exchange target information with a network-side device before transmitting a first SL positioning reference signal to a second terminal at least twice within first time. Exchange of the target information may include at least one of the following: exchange of capability information, exchange of assistance information, exchange of first location information, and exchange of SL positioning reference signal request information.

In a possible implementation, exchange of the capability information may be used to indicate whether to support determining location information of the first terminal and/or the second terminal; exchange of the assistance information may be used for receiving preconfigured information for at least two transmissions of an SL positioning reference signal; exchange of the first location information may be used for exchanging location information of the first terminal and/or location information of the second terminal; and the SL positioning reference signal request information may include a scheduling or transmission request for at least two transmissions of an SL positioning reference signal.

In a possible implementation, the preconfigured information for at least two transmissions of an SL positioning reference signal includes at least one of the following: frequency domain information for transmitting the SL positioning reference signal, time domain information for transmitting the SL positioning reference signal, sequence information for transmitting the SL positioning reference signal, and power information for transmitting the SL positioning reference signal.

In a possible implementation, the preconfigured information for at least two transmissions of the SL positioning reference signal may include at least one of the following: number of transmissions of the SL positioning reference signal, time domain information for at least two transmissions of the SL positioning reference signal, frequency domain information for at least two transmissions of the SL positioning reference signal, and power information for at least two transmissions of the SL positioning reference signal.

In a possible implementation, the radio frequency unit 1001 may be further configured to exchange second location information with the second terminal after the processor 1010 determines the first information, where exchange of the second location information may be used for exchanging the first information or exchanging location information determined based on the first information.

Regarding the terminals provided in the embodiment of this application, the first terminal can determine, through transmission of SL positioning reference signals with the second terminal, the time information related to the transmission time of the first SL positioning reference signal and the transmission time of the second SL positioning reference signal. In other words, the time information related to the transmission time of SL positioning reference signals transmitted between the two terminals in a double-sided two-way manner. Therefore, this method can eliminate the synchronization error and alleviate the impact of the clock error during terminal positioning, thereby improving the positioning accuracy.

The terminal provided in this embodiment of this application can implement the processes implemented by the first terminal in the foregoing method embodiments, with the same technical effects achieved. To avoid repetition, details are not described herein again;

and/or

the radio frequency unit 1001 may be configured to receive, within first time, a first SL positioning reference signal transmitted by a first terminal at least twice and transmit a second SL positioning reference signal to a second terminal. The processor 1010 may be configured to determine first time information and/or second time information, where the first time information and the second time information are both related to transmission time of the first SL positioning reference signal and/or transmission time of the second SL positioning reference signal.

In a possible implementation, the processor 1010 may be further configured to determine, after determining the first time information and/or the second time information, second information based on the determined first time information and/or second time information, where the second information is used for determining location information of the first terminal and/or the second terminal.

In a possible implementation, the radio frequency unit 1001 may be further configured to receive first information from the first terminal before the processor 1010 determines the second information.

In a possible implementation, the radio frequency unit 1001 may be further configured to transmit the second information to a first communications device after the processor 1010 determines the second information, where the first communications device may include at least one of the following: the first terminal; a scheduling terminal, and a network-side device.

In a possible implementation, the radio frequency unit 1001 may be further configured to exchange target information with a network-side device before receiving, within first time, a first SL positioning reference signal transmitted by a first terminal at least twice. Exchange of the target information may include at least one of the following: exchange of capability information, exchange of assistance information, exchange of third location information, exchange of and SL positioning reference signal request information.

In a possible implementation, the radio frequency unit 1001 may be further configured to exchange fourth location information with the first terminal after the processor 1010 determines the second information, where exchange of the fourth location information may be used for exchanging the second information or exchanging location information determined based on the second information.

Regarding the terminals provided in the embodiment of this application, the second terminal can determine, through transmission of SL positioning reference signals with the first terminal, the time information related to the transmission time of the first SL positioning reference signal and the transmission time of the second SL positioning reference signal. In other words, the time information related to the transmission time of SL positioning reference signals transmitted between the two terminals in a double-sided two-way manner can be determined. Therefore, this method can eliminate the synchronization error and alleviate the impact of the clock error during terminal positioning, thereby improving the positioning accuracy.

The terminal provided in this embodiment of this application can implement the processes implemented by the second terminal in the foregoing method embodiments, with the same technical effects achieved. To avoid repetition, details are not described herein again;

An embodiment of this application further provides a readable storage medium, where the readable storage medium stores a program or instruction, and when the program or instruction is executed by a processor, the processes of the foregoing embodiments of the positioning method are implemented, with the same technical effects achieved. To avoid repetition, details are not described herein again.

The processor is the processor in the terminal in the foregoing embodiments. The readable storage medium includes a computer-readable storage medium, for example, a computer read-only memory, a random access memory, a magnetic disk, or an optical disc.

An embodiment of this application further provides a chip, where the chip includes a processor and a communications interface, the communications interface is coupled to the processor, and the processor is configured to run a program or instruction to implement the processes of the foregoing embodiments of the positioning method, with the same technical effects achieved. To avoid repetition, details are not described herein again.

**EP 4 510 724 A1**

It should be understood that the chip mentioned in this embodiment of this application may also be referred to as a system-level chip, a system chip, a chip system, a system-on-chip, or the like.

An embodiment of this application further provides a computer program/program product, where the computer program/program product is stored in a storage medium. The computer program/program product is executed by at least one processor to implement the processes of the foregoing embodiments of the positioning method, with the same technical effects achieved. To avoid repetition, details are not described herein again.

An embodiment of this application further provides a communications system including the foregoing terminal, where the terminal can be configured to perform the steps of the foregoing positioning method.

It should be noted that in this specification, the terms "include" and "comprise", or any of their variants are intended to cover a non-exclusive inclusion, such that a process, method, article, or apparatus that includes a list of elements not only includes those elements but also includes other elements that are not expressly listed, or further includes elements inherent to such process, method, article, or apparatus. In absence of more constraints, an element preceded by "includes a..." does not preclude the existence of other identical elements in the process, method, article, or apparatus that includes the element. Furthermore, it should be noted that the scope of the methods and apparatuses in the embodiments of this application is not limited to performing the functions in the order shown or discussed, but may also include performing the functions in a substantially simultaneous manner or in a reverse order depending on the functions involved. For example, the described methods may be performed in an order different from that described, and various steps may be added, omitted, or combined. In addition, features described with reference to some examples may be combined in other examples.

By means of the foregoing description of the implementations, persons skilled in the art may clearly understand that the method in the foregoing embodiments may be implemented by software with a necessary general hardware platform. Certainly, the method in the foregoing embodiments may also be implemented by hardware. However, in many cases, the former is a preferred implementation. Based on such an understanding, the technical solutions of this application essentially or the part contributing to the prior art may be implemented in a form of a computer software product. The software product is stored in a storage medium (for example, a ROM/RAM, a magnetic disk, or an optical disc), and includes several instructions for instructing a terminal (which may be a mobile phone, a computer, a server, an air conditioner, a network device, or the like) to perform the method described in the embodiments of this application.

The foregoing describes the embodiments of this application with reference to the accompanying drawings. However, this application is not limited to the foregoing specific embodiments. The foregoing specific embodiments are merely illustrative rather than restrictive. As instructed by this application, persons of ordinary skill in the art may develop many other manners without departing from principles of this application and the protection scope of the claims, and all such manners fall within the protection scope of this application.

**Claims**

1.   A positioning method, wherein the method comprises:

   transmitting, by a first terminal, a first sidelink SL positioning reference signal to a second terminal at least twice within first time, and receiving a second SL positioning reference signal from the second terminal; and
   determining, by the first terminal, first time information and/or second time information; wherein
   the first time information and the second time information are both related to transmission time of the first SL positioning reference signal and/or transmission time of the second SL positioning reference signal.

2.   The method according to claim 1, wherein after the determining, by the first terminal, first time information and/or second time information, the method further comprises:

   determining, by the first terminal, first information based on the first time information and/or the second time information; wherein
   the first information is used for determining location information of the first terminal and/or the second terminal.

3.   The method according to claim 1 or 2, wherein
   the first time information comprises at least one of the following:

   transmit timing information of the first SL positioning reference signal transmitted by the first terminal; and
   receive timing information of the second SL positioning reference signal received by the first terminal; and/or
   the second time information comprises at least one of the following:

receive timing information of the first SL positioning reference signal received by the second terminal; and transmit timing information of the second SL positioning reference signal transmitted by the second terminal.

4. The method according to claim 1 or 2, wherein
the first time information comprises:

a time difference between receive timing of the second SL positioning reference signal received by the first terminal and transmit timing of the first SL positioning reference signal transmitted by the first terminal; and/or
the second time information comprises at least one of the following:

a time difference between receive timing of the first SL positioning reference signal received by the second terminal and transmit timing of the second SL positioning reference signal transmitted by the second terminal; and
a time difference between transmit timing of the second SL positioning reference signal transmitted by the second terminal and receive timing of the first SL positioning reference signal received by the second terminal.

5. The method according to claim 4, wherein
the first time information further comprises a time difference between the transmit timing of the first SL positioning reference signal transmitted by the first terminal and the receive timing of the second SL positioning reference signal received by the first terminal.

6. The method according to claim 3, wherein

the transmit timing information of the first SL positioning reference signal transmitted by the first terminal comprises transmit timing information of the first SL positioning reference signal transmitted by the first terminal at least twice;
and/or
the receive timing information of the first SL positioning reference signal received by the second terminal comprises receive timing information of the first SL positioning reference signal received by the second terminal at least twice.

7. The method according to claim 3, wherein time information comprises at least one of the following: absolute time information and relative time information.

8. The method according to claim 7, wherein the relative time information comprises at least one of the following:

time information of transmission time of an SL positioning reference signal with respect to a terminal time unit;
time information of the transmission time of the first SL positioning reference signal with respect to the transmission time of the second SL positioning reference signal; and
relative time information between transmission times of the first SL positioning reference signal transmitted at least twice.

9. The method according to claim 3, wherein time information comprises at least one of the following: a subframe and a slot unit; wherein
the subframe is a subframe corresponding to a terminal, and the slot unit is a time unit corresponding to a terminal; wherein subcarrier spacing SCS associated with the slot unit is either of the following: SL bandwidth part BWP and SCS for transmitting an SL positioning reference signal.

10. The method according to any one of claims 7 to 9, wherein the time information comprises at least one of the following:

receive timing information associated with a first detected path; and
receive timing information associated with L detected paths; wherein
L is a positive integer.

11. The method according to claim 2, wherein the first information comprises at least one of the following:

identification information of the first terminal;

the first time information;

first time stamp information;

identification information of the first SL positioning reference signal;

identification information of the second SL positioning reference signal;

reference signal receiving power RSRP of the second SL positioning reference signal; and

first line of sight LOS indicator information; wherein

the first time stamp information is used to indicate a time stamp associated with the first time information.

12. The method according to claim 2, wherein the first information comprises at least one of the following:

identification information of the first terminal;

identification information of the second terminal;

third time information;

second time stamp information;

identification information of the first SL positioning reference signal;

identification information of the second SL positioning reference signal;

RSRP of the second SL positioning reference signal; and

first LOS indicator information; wherein

the third time information is used to indicate a first parameter used between the first terminal and the second terminal, and the first parameter comprises transmission delay or relative distance; and the second time stamp information is used to indicate a time stamp associated with the third time information.

13. The method according to claim 1, wherein the first SL positioning reference signals transmitted by the first terminal at least twice have the same sequence or the same signal identification information; or the first SL positioning reference signals transmitted by the first terminal at least twice are different.

14. The method according to claim 1, wherein the first SL positioning reference signal transmitted by the first terminal at least twice comprises at least one of the following:

at least two SL positioning reference signal resources scheduled by one sidelink control information SCI;

one SL positioning reference signal group containing at least two SL positioning reference signal resources;

an SL positioning reference signal transmitted repeatedly at least twice;

at least two SL positioning reference signal resources scheduled separately; and

at least two SL positioning reference signal resources required for scheduling or request as indicated by indication information.

15. The method according to claim 1, wherein an interval between transmit timing of the second SL positioning reference signal and transmit timing of the first SL positioning reference signal is greater than or equal to a first time threshold.

16. The method according to claim 1, wherein receive timing of at least one of the second SL positioning reference signals received by the first terminal is between transmit timings of the first SL positioning reference signal transmitted by the first terminal at least twice.

17. The method according to claim 1, wherein the first SL positioning reference signal transmitted at least twice, and/or the first SL positioning reference signal and the second SL positioning reference signal each satisfy a first condition; wherein

the first condition comprises at least one of the following:

bandwidths used for transmitting SL positioning reference signals are the same;

starting frequency domain positions used for transmitting SL positioning reference signals are the same;

periodicities for transmitting SL positioning reference signals are the same;

symbols used for transmitting SL positioning reference signals are the same;

comb values of comb structures used for transmitting SL positioning reference signals are the same;

SCSs used for transmitting SL positioning reference signals are the same; and

sequence identities IDs used for transmitting SL positioning reference signals are the same.

18. The method according to claim 1, wherein the second SL positioning reference signal and the first SL positioning reference signal transmitted at least twice satisfy a second condition; wherein
the second condition comprises at least one of the following:

a time domain offset between the second SL positioning reference signal and the first SL positioning reference signal transmitted at least twice is less than or equal to a second time threshold;
a time domain offset between the second SL positioning reference signal and the first SL positioning reference signal transmitted at least twice is less than or equal to a third time threshold; and
sequence IDs of the second SL positioning reference signal and the first SL positioning reference signal transmitted at least twice are different.

19. The method according to claim 1, wherein
the first time comprises at least one of the following:

a time range preconfigured by a network side;
a time range defined by a protocol;
at least one time unit scheduled with respect to the first SL positioning reference signal transmitted for the first time;
at least one time unit with respect to the first SL positioning reference signal transmitted for the first time;
a time window preconfigured by a network side; and
a time window defined by a protocol; wherein
the time window comprises at least one of start time information and window length.

20. The method according to claim 2, wherein
the location information comprises at least one of the following:

relative location information;
absolute location information;
relative distance information; and
relative angle information.

21. The method according to claim 2, wherein before the determining first information, the method further comprises:

receiving, by the first terminal, second information from the second terminal; wherein
the second information comprises at least one of the following:

identification information of the second terminal;
the second time information;
third time stamp information;
identification information of the first SL positioning reference signal;
identification information of the second SL positioning reference signal;
RSRP of the second SL positioning reference signal; and
second LOS indicator information; wherein
the third time stamp information is used to indicate a time stamp associated with the second time information.

22. The method according to claim 2, wherein after the determining first information, the method further comprises:

transmitting, by the first terminal, the first information to a first communications device; wherein
the first communications device comprises at least one of the following:

the second terminal;
a scheduling terminal; and
a network-side device.

23. The method according to claim 1, wherein before the transmitting, by a first terminal, a first SL positioning reference signal to a second terminal at least twice within first time, the method further comprises:

exchanging, by the first terminal, target information with a network-side device; wherein

exchange of the target information comprises at least one of the following:

exchange of capability information;
exchange of assistance information;
exchange of first location information; and
exchange of SL positioning reference signal request information.

24. The method according to claim 23, wherein

the exchange of capability information is used to indicate whether the first terminal supports determining location information of the first terminal and/or the second terminal;
the exchange of assistance information is used for the first terminal to receive preconfigured information for at least two transmissions of an SL positioning reference signal;
the exchange of first location information is used for exchanging location information of the first terminal and/or location information of the second terminal; and
the SL positioning reference signal request information comprises a scheduling or transmission request for at least two transmissions of an SL positioning reference signal.

25. The method according to claim 24, wherein
the preconfigured information for at least two transmissions of an SL positioning reference signal comprises at least one of the following:

frequency domain information for transmitting the SL positioning reference signal;
time domain information for transmitting the SL positioning reference signal;
sequence information for transmitting the SL positioning reference signal; and
power information for transmitting the SL positioning reference signal.

26. The method according to claim 24, wherein the preconfigured information for at least two transmissions of an SL positioning reference signal comprises at least one of the following:

number of transmissions of the SL positioning reference signal;
time domain information for at least two transmissions of the SL positioning reference signal;
frequency domain information for at least two transmissions of the SL positioning reference signal; and
power information for at least two transmissions of the SL positioning reference signal.

27. The method according to claim 2, wherein after the determining first information, the method further comprises:

exchanging, by the first terminal, second location information with the second terminal; wherein
exchange of the second location information is used for exchanging the first information or exchanging location information determined based on the first information.

28. A positioning method, wherein the method comprises:

receiving, by a second terminal within first time, a first SL positioning reference signal transmitted by a first terminal at least twice, and transmitting a second SL positioning reference signal to the second terminal; and
determining, by the second terminal, first time information and/or second time information; wherein
the first time information and the second time information are both related to transmission time of the first SL positioning reference signal and/or transmission time of the second SL positioning reference signal.

29. The method according to claim 28, wherein after the determining, by the second terminal, first time information and/or second time information, the method further comprises:

determining, by the second terminal, second information based on the first time information and/or the second time information; wherein
the second information is used for determining location information of the first terminal and/or the second terminal.

30. The method according to claim 29, wherein before the determining second information, the method further comprises:
receiving, by the second terminal, first information from the first terminal.

31. The method according to claim 29, wherein after the determining second information, the method further comprises:

transmitting, by the second terminal, the second information to a first communications device; wherein the first communications device comprises at least one of the following:

the first terminal;
a scheduling terminal; and
a network-side device.

32. The method according to claim 28, wherein before the receiving, by a second terminal within first time, a first SL positioning reference signal transmitted by a first terminal at least twice, the method further comprises:

exchanging, by the second terminal, target information with a network-side device; wherein exchange of the target information comprises at least one of the following:

exchange of capability information;
exchange of assistance information;
exchange of third location information; and
exchange of SL positioning reference signal request information.

33. The method according to claim 29, wherein after the determining second information, the method further comprises:

exchanging, by the second terminal, fourth location information with the first terminal; wherein exchange of the fourth location information is used for exchanging the second information or exchanging location information determined based on the second information.

34. A positioning apparatus, wherein the apparatus comprises a transmission module and a determining module; wherein

the transmission module is configured to transmit a first SL positioning reference signal to a second terminal at least twice within first time and receive a second SL positioning reference signal from the second terminal; and the determining module is configured to determine first time information and/or second time information; wherein the first time information and the second time information are both related to transmission time of the first SL positioning reference signal and/or transmission time of the second SL positioning reference signal.

35. A positioning apparatus, wherein the apparatus comprises a transmission module and a determining module; wherein

the transmission module is configured to receive, within first time, a first SL positioning reference signal transmitted by a first terminal at least twice and transmit a second SL positioning reference signal to a second terminal; and
the determining module is configured to determine first time information and/or second time information; wherein the first time information and the second time information are both related to transmission time of the first SL positioning reference signal and/or transmission time of the second SL positioning reference signal.

36. A terminal, comprising a processor and a memory, wherein the memory stores a program or an instruction capable of running on the processor, and when the program or instruction is executed by the processor, steps of the positioning method according to any one of claims 1 to 27 are implemented or steps of the positioning method according to any one of claims 28 to 33 are implemented.

37. A readable storage medium, wherein the readable storage medium stores a program or an instruction, and when the program or instruction is executed by the processor, steps of the positioning method according to any one of claims 1 to 27 are implemented or steps of the positioning method according to any one of claims 28 to 33 are implemented.

12

Network-side
device

11

11

Terminal

Terminal

FIG. 1

A first terminal sends a first SL positioning reference signal to a second terminal at least twice within first time, and receives a second SL positioning reference signal from the second terminal

201

The first terminal determines first time information and/or second time information

202

FIG. 2

Sending time 1　　　　Receiving time 1　　Receiving time 2

UE1

SL-PRS1

SL-PRS2

SL-PRS3 or SL-PRS1 repetition

UE2

Receiving time1'　　Sending time1'　　　Receiving time2'

FIG. 3

$T_{UE1-round(Rx-Tx)}$　　　　　　$T_{UE1-reply(Tx-Rx)}$

UE 1

SL-PRS1

SL-PRS2

SL-PRS3 or SL-PRS1 repetition

UE 2　　　T

$T_{UE2-reply(Tx-Rx)}$　　　　　　$T_{UE2-round(Rx-Tx)}$

FIG. 4

$T_{\text{UE1-round(Rx-Tx)}}$   $T_{\text{UE1-reply(Tx-Rx)}}$

UE 1

SL-PRS 1

SL-PRS 2

SL-PRS 3 or
SL-PRS 1
repetition

UE 2

T

$T_{\text{UE2-reply(Tx-Rx)}}$   $T_{\text{UE2-round(Rx-Tx)}}$

FIG. 5

A second terminal receives, within first time, a first SL positioning reference signal sent by a first terminal at least twice, and sends a second SL positioning reference signal to the second terminal | 601

The second terminal determines first time information and/or second time information | 602

FIG. 6

70

Positioning apparatus

Transmission module — 71

Determining module — 72

FIG. 7

80

Positioning apparatus

Transmission module — 81

Determining module — 82

FIG. 8

900

Terminal

901 — Processor ⟺ Memory — 902

FIG. 9

1000

1001 — Radio frequency unit

Network module — 1002

Memory
1009 — Application program
Operating system

1010 — Processor

Audio output unit — 1003

1004
Input unit
Graphics processing unit — 10041
Microphone — 10042

1008 — Interface unit

1007
User input unit
1007 — Touch panel
10072 — Other input devices

1006
Display unit — 10061
Display panel

Sensor — 1005

FIG. 10

## INTERNATIONAL SEARCH REPORT

| International application No. |
|---|
| **PCT/CN2023/087656** |

**A. CLASSIFICATION OF SUBJECT MATTER**

H04W64/00(2009.01)i

According to International Patent Classification (IPC) or to both national classification and IPC

**B. FIELDS SEARCHED**

Minimum documentation searched (classification system followed by classification symbols)

IPC: H04W, H04L

Documentation searched other than minimum documentation to the extent that such documents are included in the fields searched

Electronic data base consulted during the international search (name of data base and, where practicable, search terms used)

CNTXT; ENTXTC; WPABSC; VEN; CNKI; 3GPP: 两次, 两, 第二, 旁, 侧, 直通, 副, 边, 链路, SL, 定位, 信号, 时间, twice, two, second, sidelink, side link, position, signal, time

**C. DOCUMENTS CONSIDERED TO BE RELEVANT**

| Category* | Citation of document, with indication, where appropriate, of the relevant passages | Relevant to claim No. |
|---|---|---|
| A | WO 2021097598 A1 (HUAWEI TECHNOLOGIES CO., LTD.) 27 May 2021 (2021-05-27) description, page 10, line 19 to page 31, line 15, and figures 1-15 | 1-37 |
| A | CN 114205735 A (SHANGHAI LANGBO COMMUNICATION TECHNOLOGY CO., LTD.) 18 March 2022 (2022-03-18) entire document | 1-37 |
| A | US 2021243720 A1 (SAMSUNG ELECTRONICS CO., LTD.) 05 August 2021 (2021-08-05) entire document | 1-37 |
| A | WO 2021232228 A1 (QUALCOMM INC.) 25 November 2021 (2021-11-25) entire document | 1-37 |

☐ Further documents are listed in the continuation of Box C.   ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **19 June 2023** | **19 June 2023** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

<table>
<tr><td colspan="3" align="center">INTERNATIONAL SEARCH REPORT</td><td colspan="2">International application No.</td></tr>
<tr><td colspan="3" align="center">Information on patent family members</td><td colspan="2" align="center">**PCT/CN2023/087656**</td></tr>
</table>

| Patent document cited in search report | | | Publication date (day/month/year) | Patent family member(s) | | | Publication date (day/month/year) |
|---|---|---|---|---|---|---|---|
| WO | 2021097598 | A1 | 27 May 2021 | AU | 2019475080 | A1 | 16 June 2022 |
| | | | | US | 2022279313 | A1 | 01 September 2022 |
| | | | | EP | 4054258 | A1 | 07 September 2022 |
| | | | | EP | 4054258 | A4 | 16 November 2022 |
| CN | 114205735 | A | 18 March 2022 | | None | | |
| US | 2021243720 | A1 | 05 August 2021 | KR | 20220134530 | A | 05 October 2022 |
| | | | | EP | 4098039 | A1 | 07 December 2022 |
| | | | | WO | 2021154050 | A1 | 05 August 2021 |
| WO | 2021232228 | A1 | 25 November 2021 | KR | 20230011305 | A | 20 January 2023 |
| | | | | BR | 112022022734 | A2 | 31 January 2023 |
| | | | | EP | 4154554 | A1 | 29 March 2023 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

• CN 202210384079